(19) Europäisches Patentamt
European Patent Office
Office européen des brevets

(11) **EP 4 471 726 A1**

(12) **EUROPEAN PATENT APPLICATION**
published in accordance with Art. 153(4) EPC

(43) Date of publication:
**04.12.2024  Bulletin 2024/49**

(21) Application number: **23746692.5**

(22) Date of filing: **13.01.2023**

(51) International Patent Classification (IPC):
*G06T 19/00* (2011.01)     *G06Q 30/0201* (2023.01)
*G06T 13/40* (2011.01)     *G09B 29/00* (2006.01)

(52) Cooperative Patent Classification (CPC):
**G06Q 30/0201; G06T 13/40; G06T 19/00;
G09B 29/00**

(86) International application number:
**PCT/JP2023/000719**

(87) International publication number:
**WO 2023/145478 (03.08.2023 Gazette 2023/31)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.01.2022  JP 2022012305**

(71) Applicant: **Sony Semiconductor Solutions
Corporation
Atsugi-shi, Kanagawa 243-0014 (JP)**

(72) Inventors:
• **ICHIKI, Hiroshi
Atsugi-shi, Kanagawa 243-0014 (JP)**
• **KASHIMORI, Masaki
Atsugi-shi, Kanagawa 243-0014 (JP)**

(74) Representative: **MFG Patentanwälte
Meyer-Wildhagen Meggle-Freund
Gerhard PartG mbB
Amalienstraße 62
80799 München (DE)**

(54) **DATA PROCESSING DEVICE, DATA PROCESSING METHOD, AND PROGRAM**

(57)     The present technology relates to a data processing device, a data processing method, and a program capable of producing various scenes at a facility existing in a real space as realistic CG images without requiring time and effort.

A movement route is generated for a person model included in a 3D model that is dynamic and provided for forming a CG image. The person model moves on a virtual facility model imitating a facility in a real space. The movement route is generated using a statistic associated with a real user moving in the facility.

FIG.1

**Description**

[Technical Field]

The present technology relates to a data processing device, a data processing method, and a program, and particularly to a data processing device, a data processing method, and a program capable of producing various scenes at a facility existing in a real space as realistic CG images without requiring time and effort.

[Background Art]

PTL 1 proposes a CG character animation creating device which converts controllable feature values extracted from measurement values associated with a body shape and varying from moment to moment into position and posture information indicating angles of joints or sizes of portions of a CG character.

[Citation List]

[Patent Literature]

[PTL 1]
JP 2008-176696A

[Summary]

[Technical Problem]

For forming CG images by imitating real images captured at facilities such as a department store and a supermarket without change, it is necessary to employ a CG designer who designs facilities and movements of persons to form CG images of various scenes. In this case, labor, time, and costs equivalent to or more than those of real images are required.

The present technology has been developed in consideration of the above-mentioned circumstances, and produces various scenes at a facility existing in a real space as realistic CG images without requiring time and effort.

[Solution to Problem]

A data processing device according to the present technology is a data processing device including a generation unit that generates a movement route for a person model included in a 3D model that is dynamic and provided for forming a CG image, the person model moving on a virtual facility model imitating a facility in a real space, and the movement route being generated using a statistic associated with a real user moving in the facility. Alternatively, a program according to the present technology is a program for causing a computer to function as this data processing device.

A data processing method according to the present technology is a data processing method for a data processing device including a generation unit. The generation unit generates a movement route for a person model included in a 3D model that is dynamic and provided for forming a CG image, the person model moving on a virtual facility model imitating a facility in a real space, and the movement route being generated using a statistic associated with a real user moving in the facility.

According to the data processing device, the data processing method, and the program of the present technology, a movement route is generated for a person model included in a 3D model that is dynamic and provided for forming a CG image. The person model moves on a virtual facility model imitating a facility in a real space. The movement route is generated using a statistic associated with a real user moving in the facility.

[Brief Description of Drawings]

[FIG. 1]

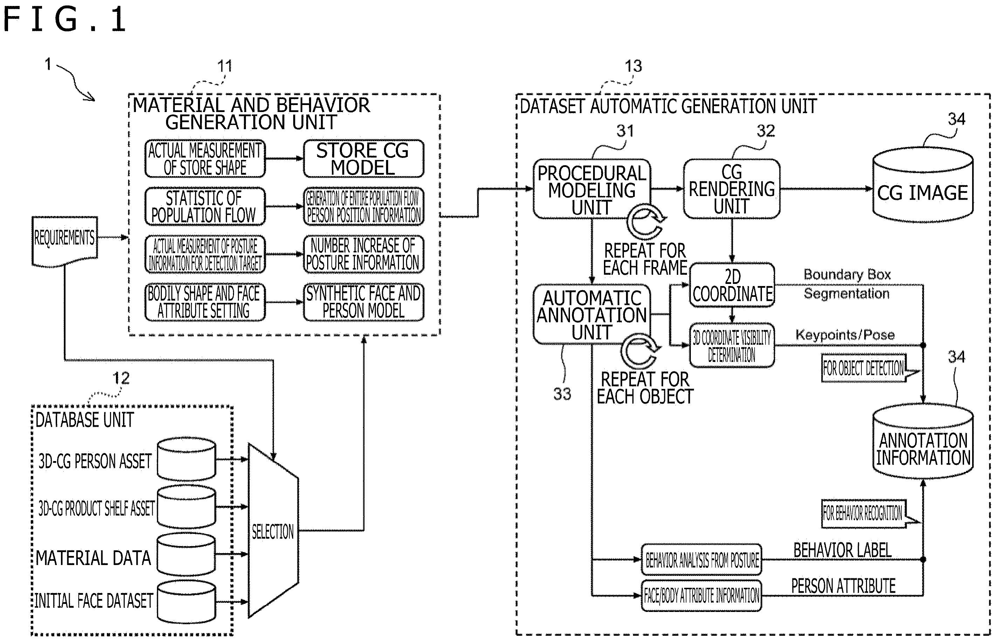

FIG. 1 is a block diagram depicting a configuration example of a data processing system according to an embodiment to which the present technology is applied.
[FIG. 2]

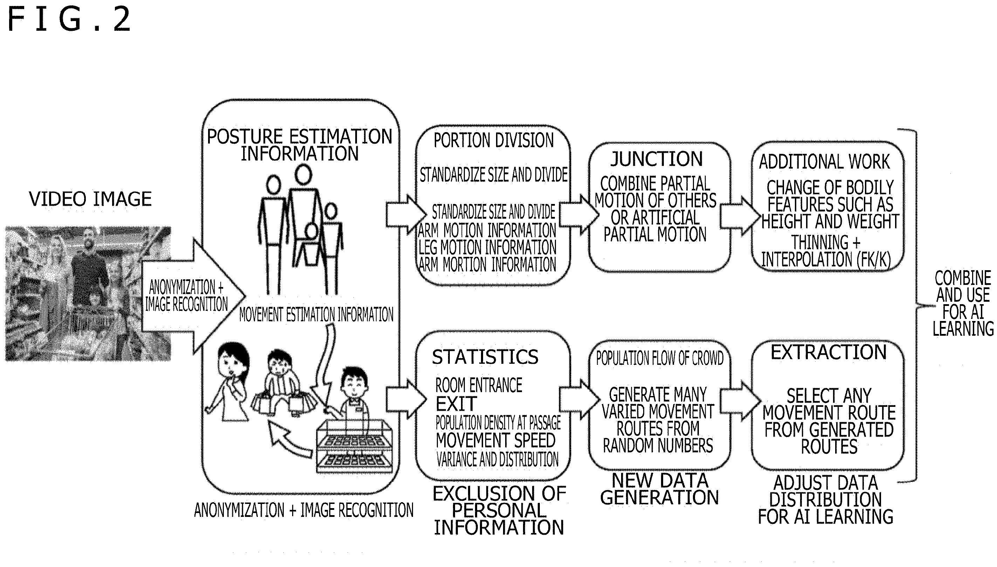

FIG. 2 is a diagram illustrating a flow of a behavior data generation process performed by a material and behavior generation unit 11.

[FIG. 3]

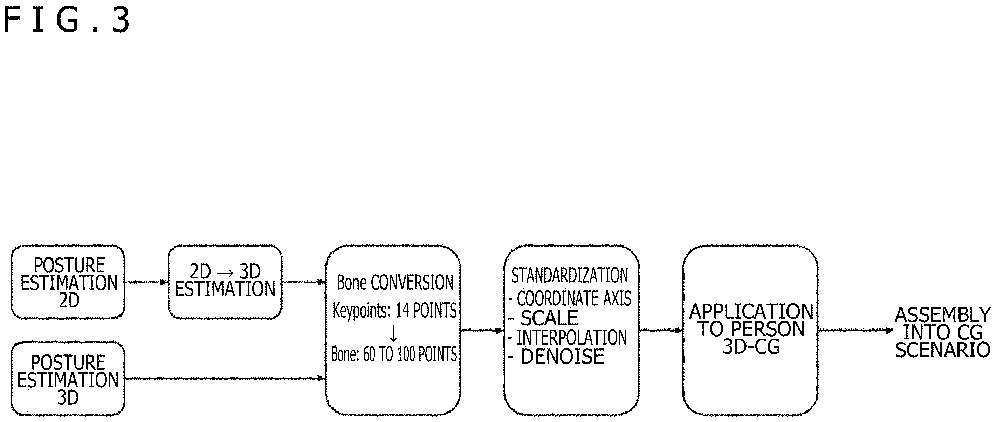

FIG. 3 is a diagram depicting an example of an outline of a posture data generation unit.
[FIG. 4]

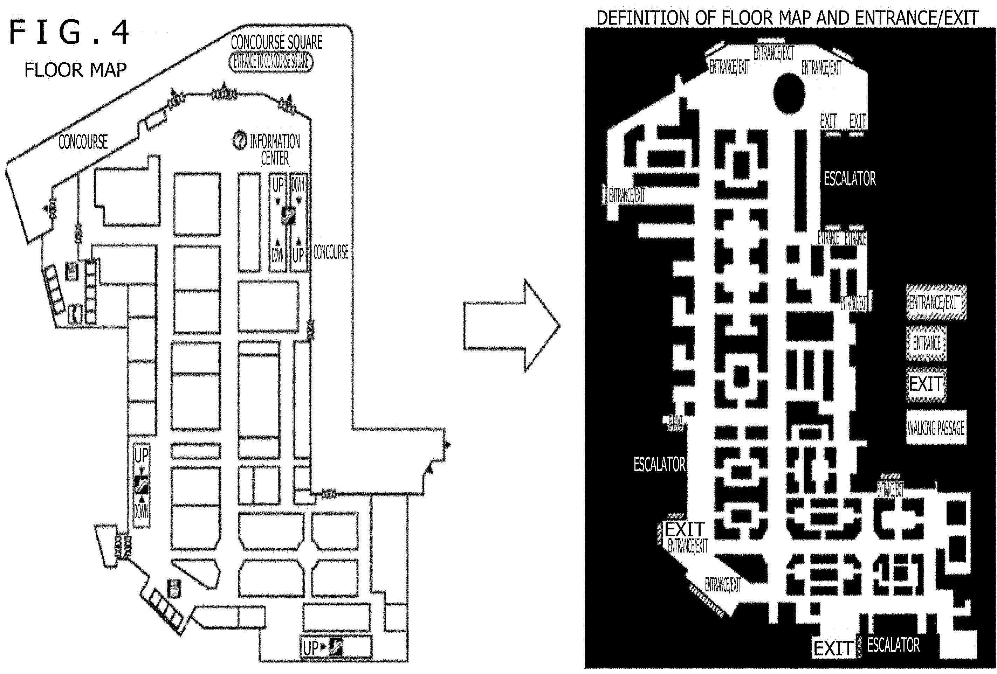

FIG. 4 is a diagram depicting characteristic places such as entrances/exits, and passages through which persons are allowed to pass, each indicated in a floor map.
[FIG. 5]

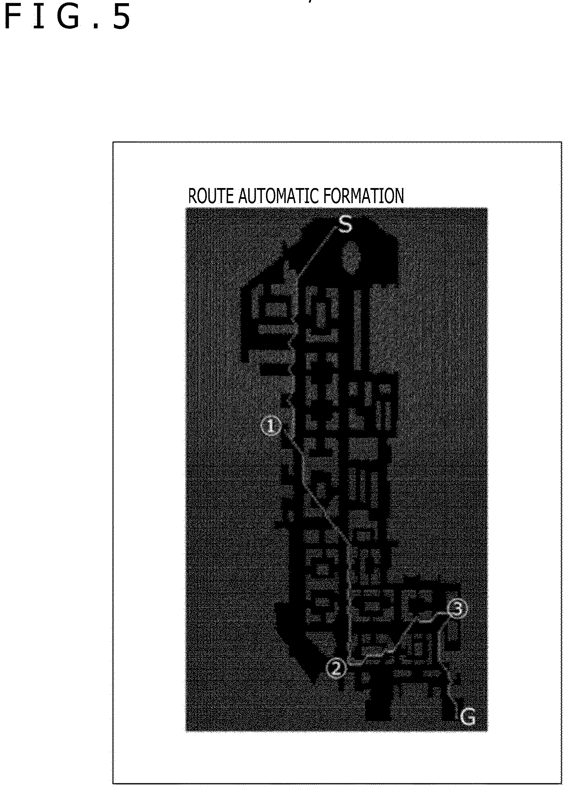

FIG. 5 is a diagram depicting an example of a movement route generated by an A* algorithm.
[FIG. 6]

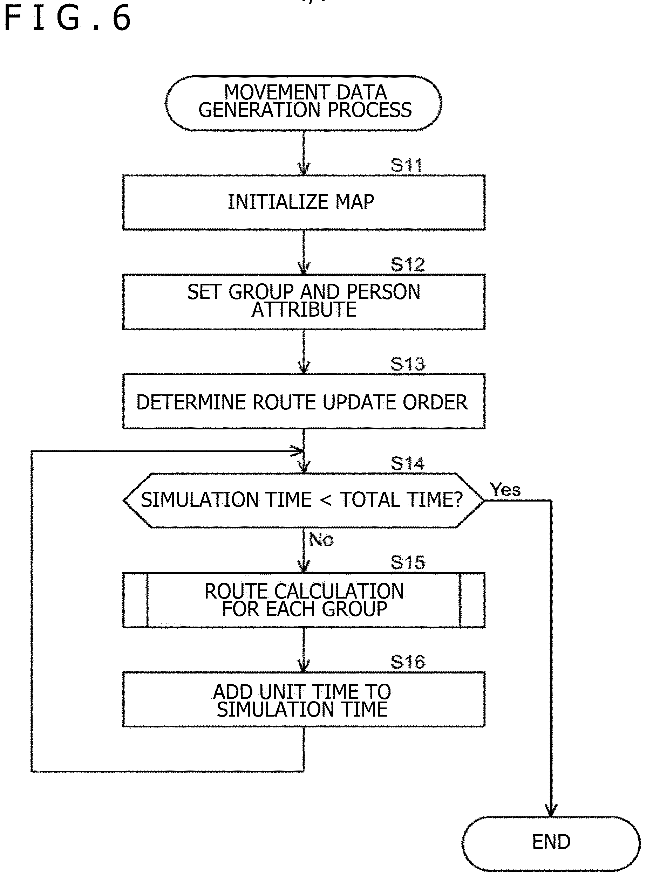

FIG. 6 is a flowchart illustrating an example of procedures of a movement data generation process for a person model with use of a combination of the A* algorithm and a multi-agent system.
[FIG. 7]

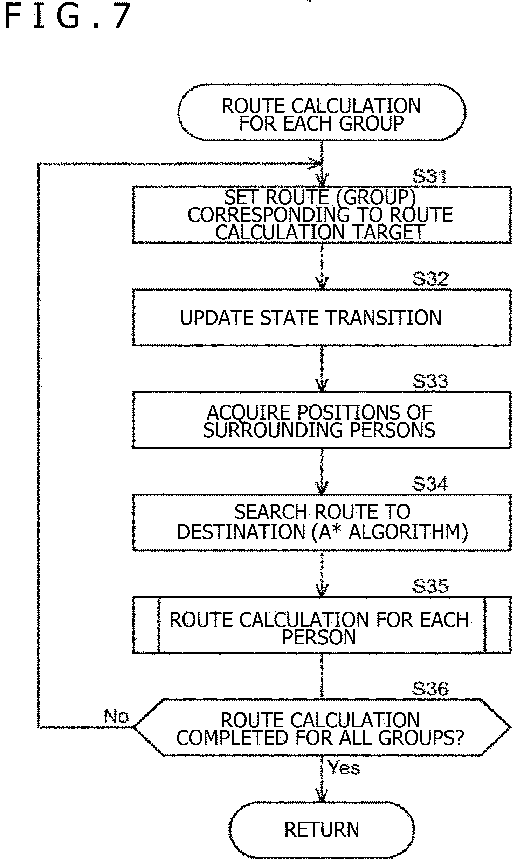

FIG. 7 is a flowchart illustrating an example of procedures of route calculation for each group.
[FIG. 8]

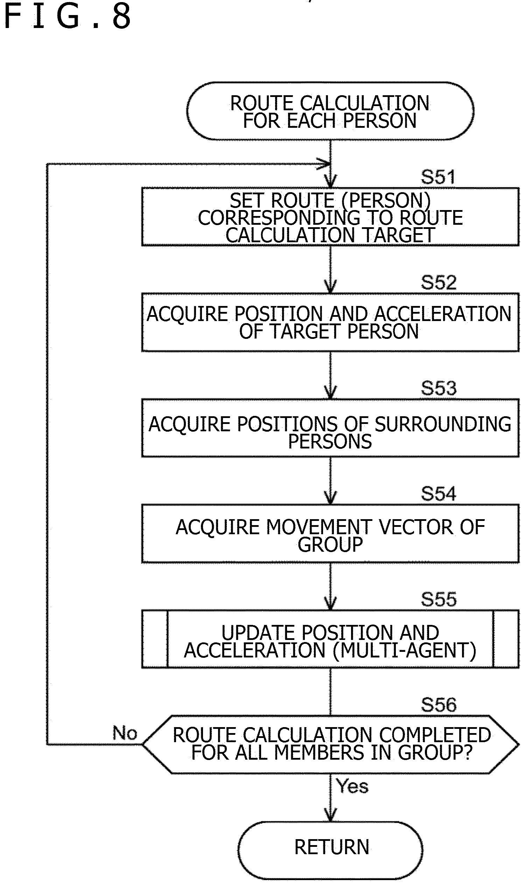

FIG. 8 is a flowchart illustrating an example of procedures of route calculation for each person.
[FIG. 9]

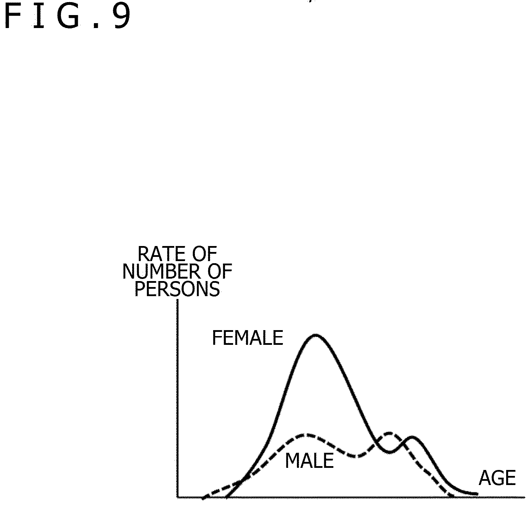

FIG. 9 is a diagram illustrating an example of statistics indicating proportions (numbers) of male users and female users using (visiting) a target store by age group.
[FIG. 10]

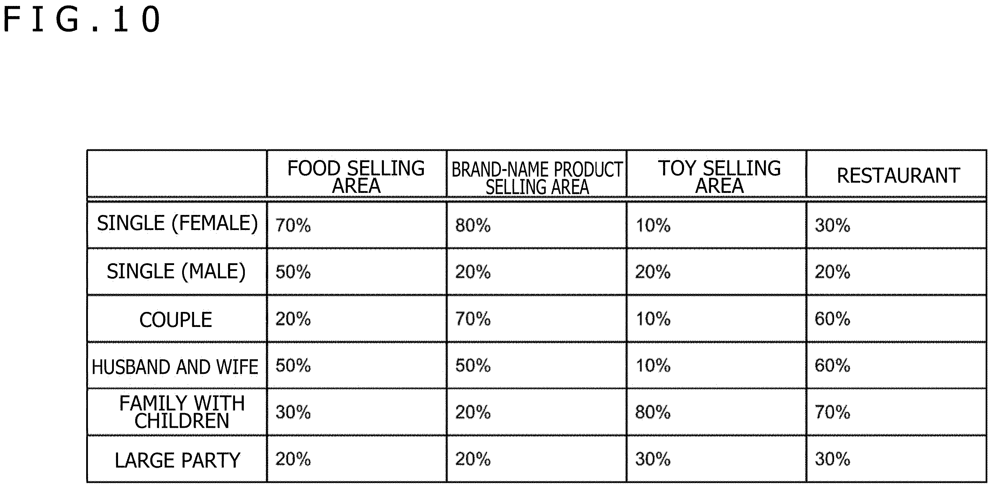

FIG. 10 is a diagram illustrating an example of visit probabilities (rates) of respective visits to a food selling area, a brand-name product selling area, a toy selling area, and a restaurant for each attribute of groups.
[FIG. 11]

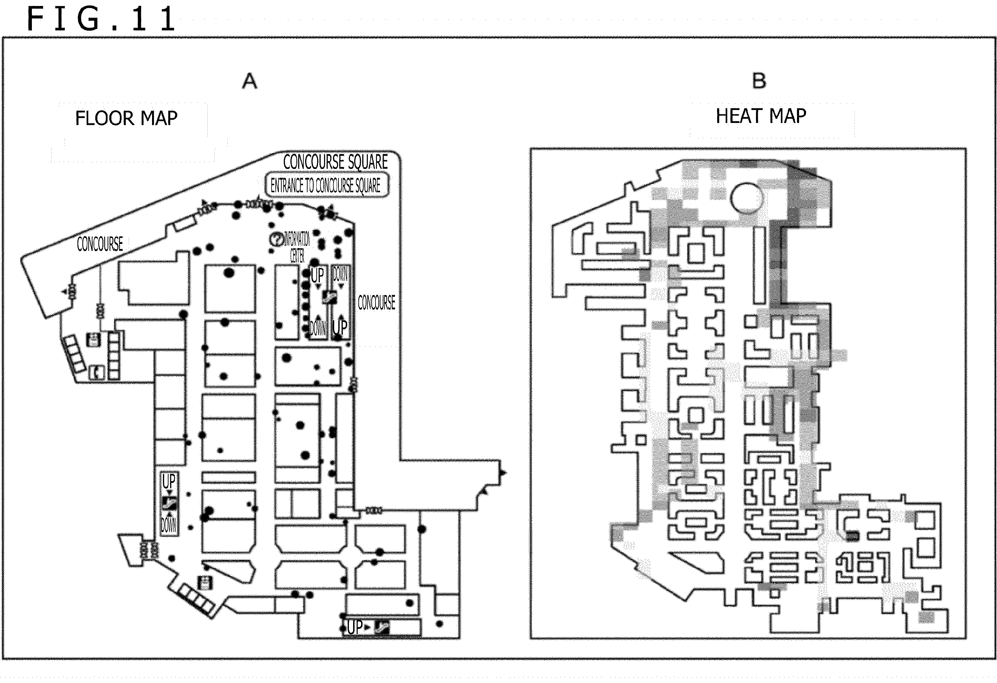

FIG. 11 is a diagram depicting an example of a distribution (heat map) of population density when person models are moved along calculated movement routes.
[FIG. 12]

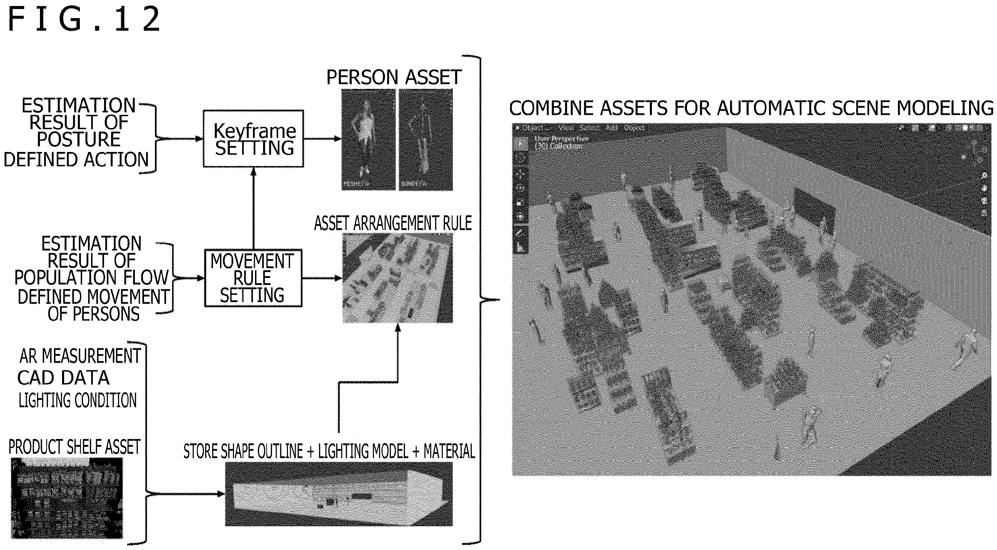

FIG. 12 is a diagram illustrating a fitting process performed by the material and behavior generation unit.
[FIG. 13]

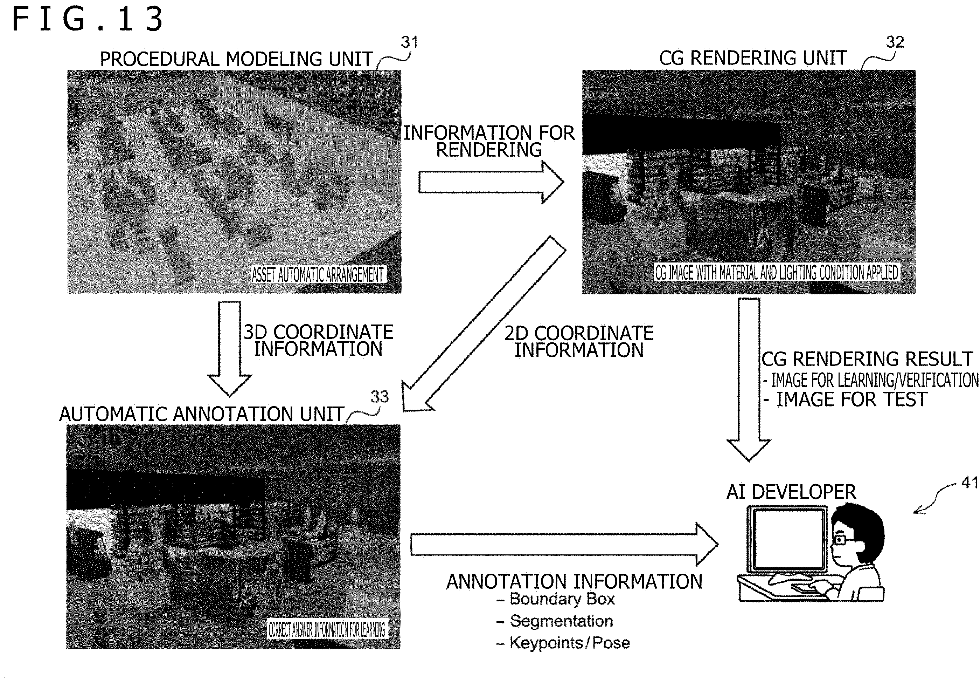

FIG. 13 is a diagram depicting data exchange between a procedural modeling unit, a CG rendering unit, and an automatic annotation unit.
[FIG. 14]

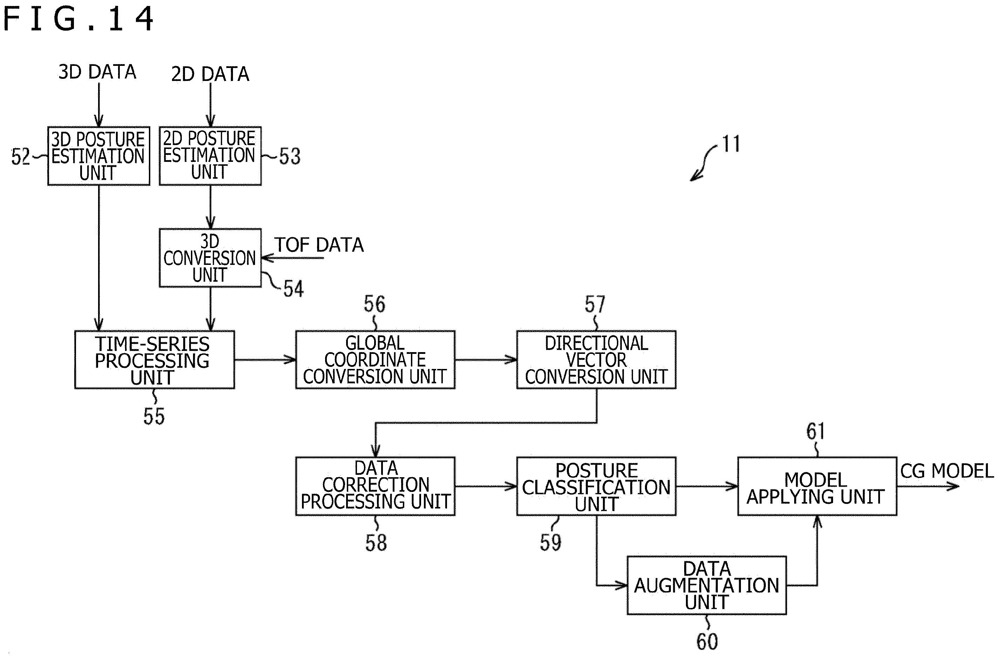

FIG. 14 is a block diagram depicting a configuration example of a data processing device according to one embodiment to which the present technology is applied.
[FIG. 15]

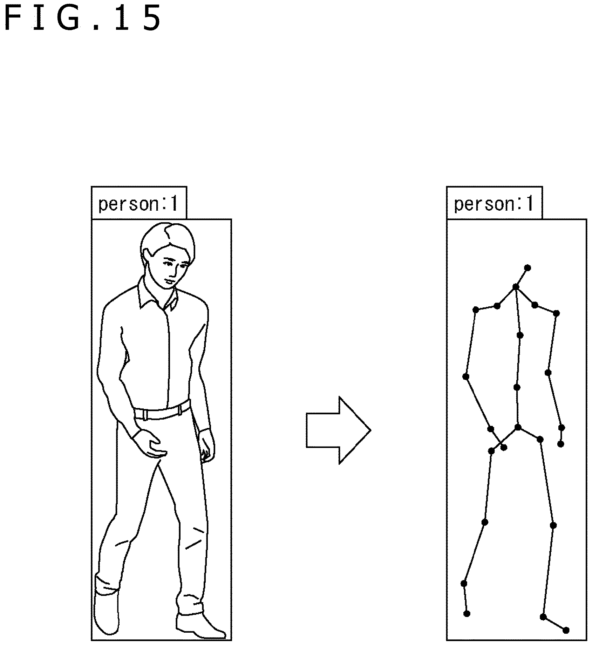

FIG. 15 is a diagram depicting an example of 3D posture data.
[FIG. 16]

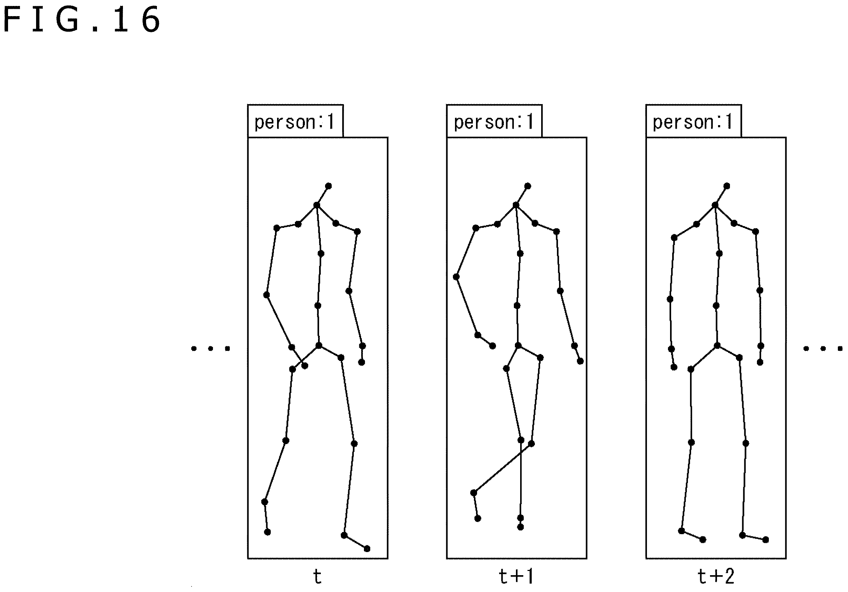

FIG. 16 is a diagram explaining a time-series process.
[FIG. 17]

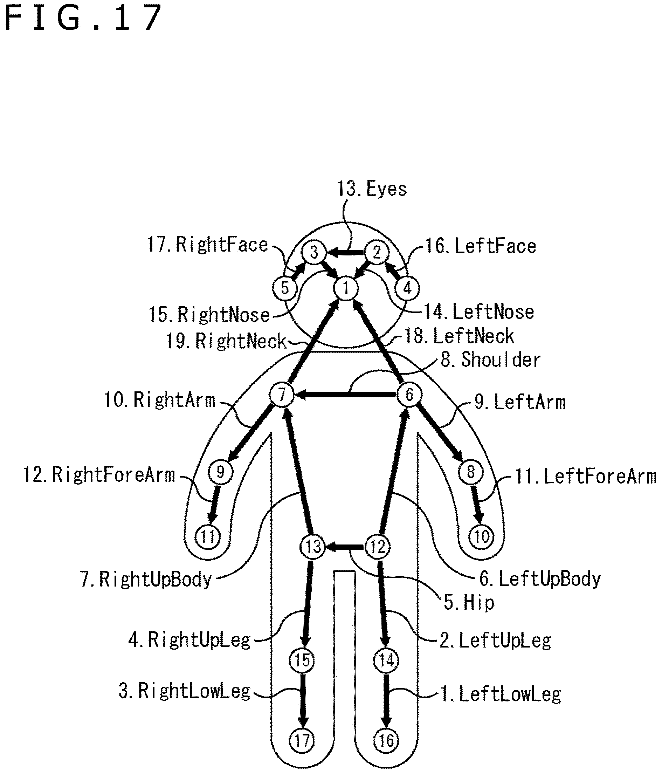

FIG. 17 is a diagram depicting an example of directional vectors representing posture data.
[FIG. 18]

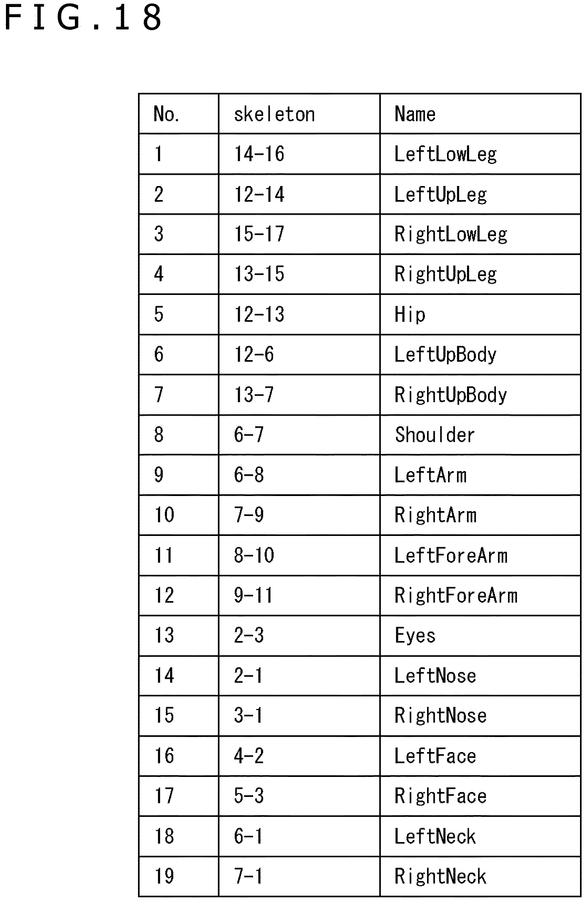

FIG. 18 is a diagram illustrating start points and end points of the directional vectors, and names in association with each other.
[FIG. 19]

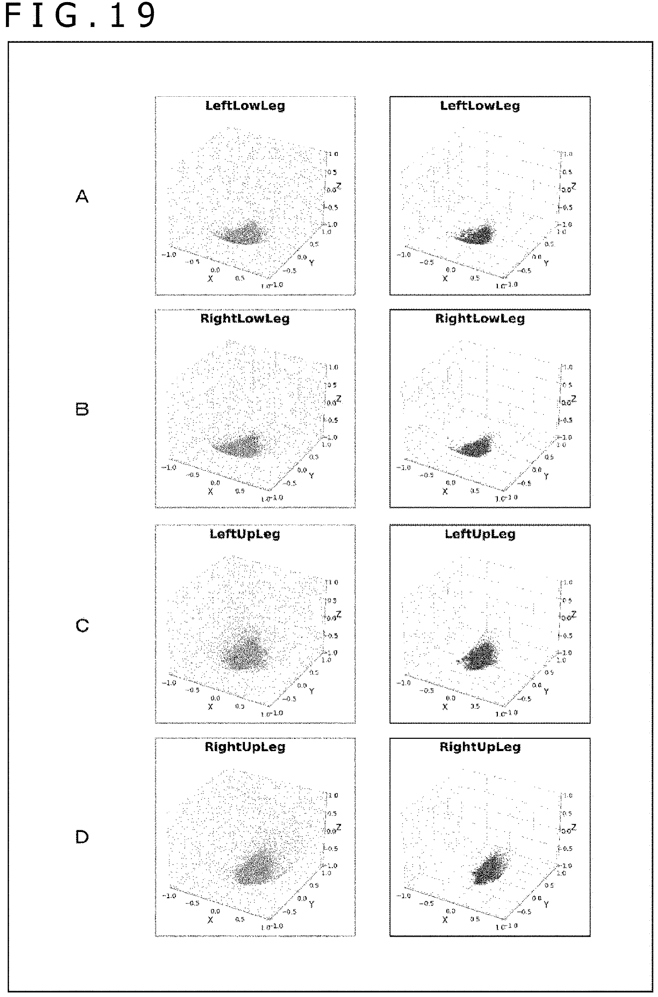

FIG. 19 is a diagram depicting an example of distributions of a LeftLowLeg vector, a RightLowLeg vector, a LeftUpLeg vector, and a RightUpLeg vector before and after data cleansing.
[FIG. 20]

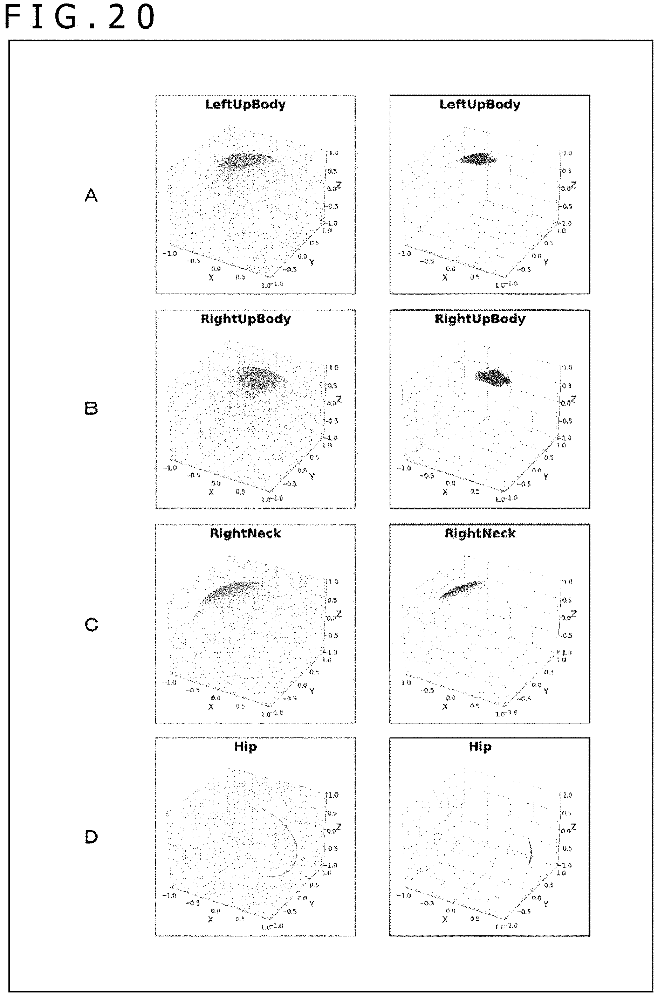

FIG. 20 is a diagram depicting an example of distributions of a LeftUpBody vector, a RightUpBody vector, a RightNeck vector, and a Hip vector before and after data cleansing.
[FIG. 21]

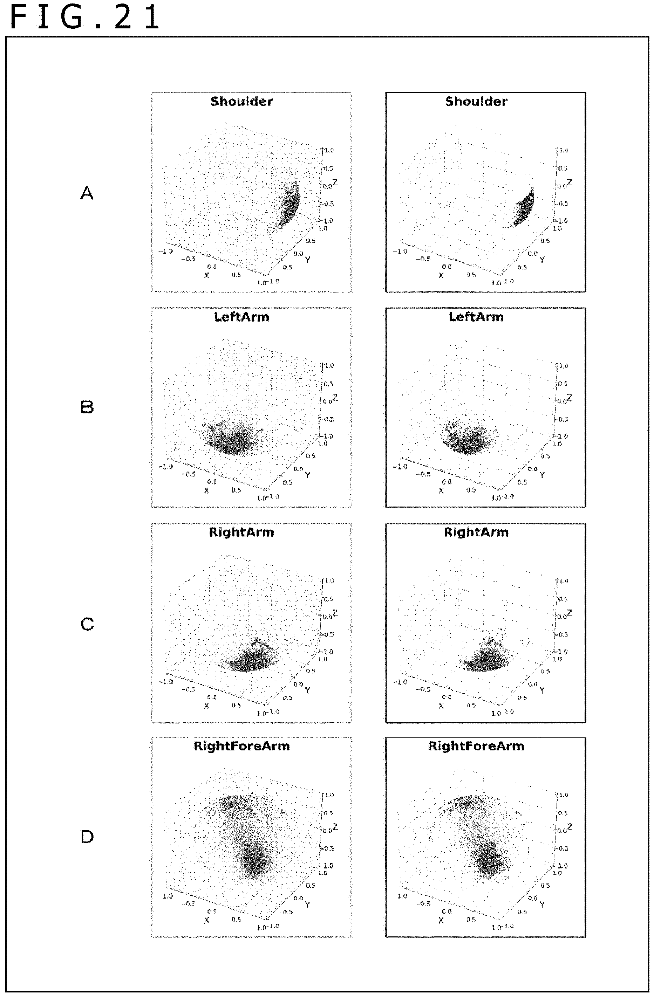

FIG. 21 is a diagram depicting an example of distributions of a Shoulder vector, a LeftArm vector, a RightArm vector, and a RightForeArm vector before and after data cleansing.
[FIG. 22]

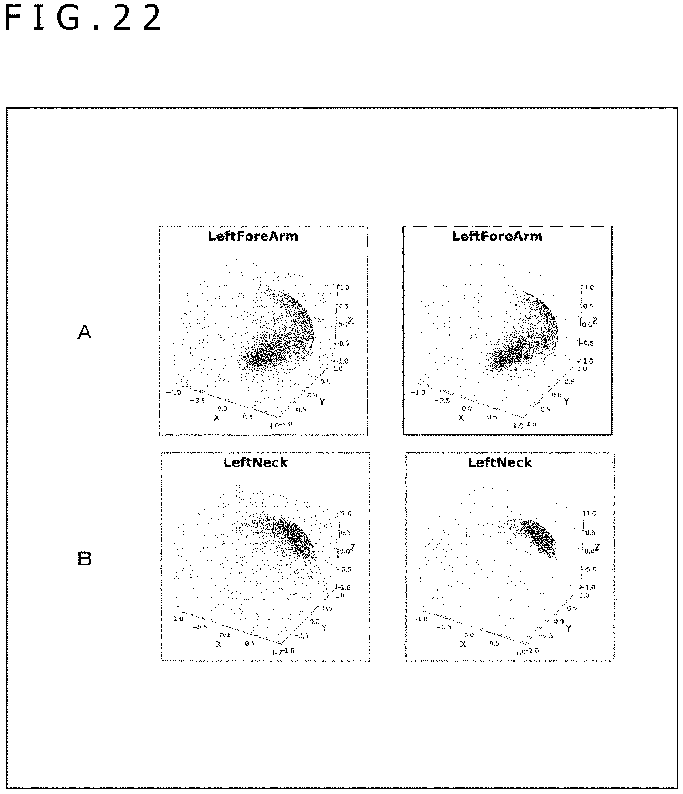

FIG. 22 is a diagram depicting an example of distributions of a LeftForeArm vector and a LeftNeck vector before and after data cleansing.
[FIG. 23]

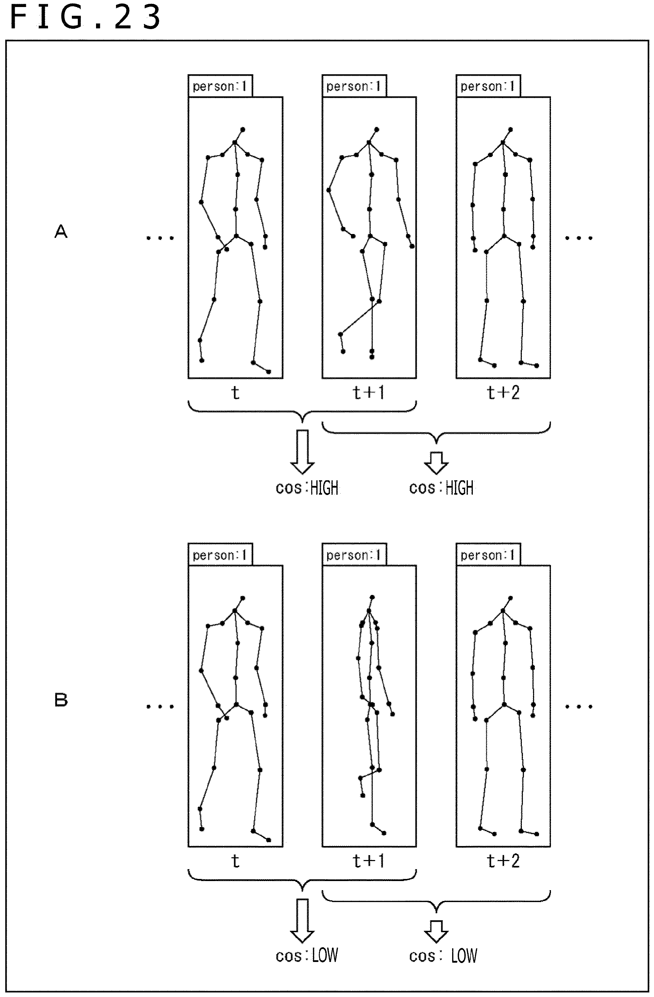

FIG. 23 is a diagram explaining data cleansing for deleting posture data according to time-series limitations.
[FIG. 24]

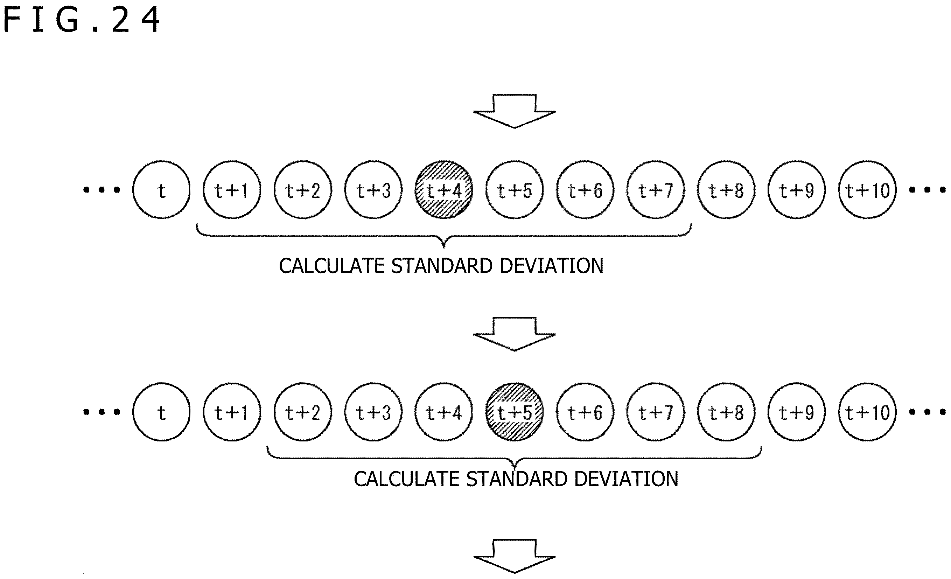

FIG. 24 is a diagram explaining movement standard deviations with a window size of 7.
[FIG. 25]

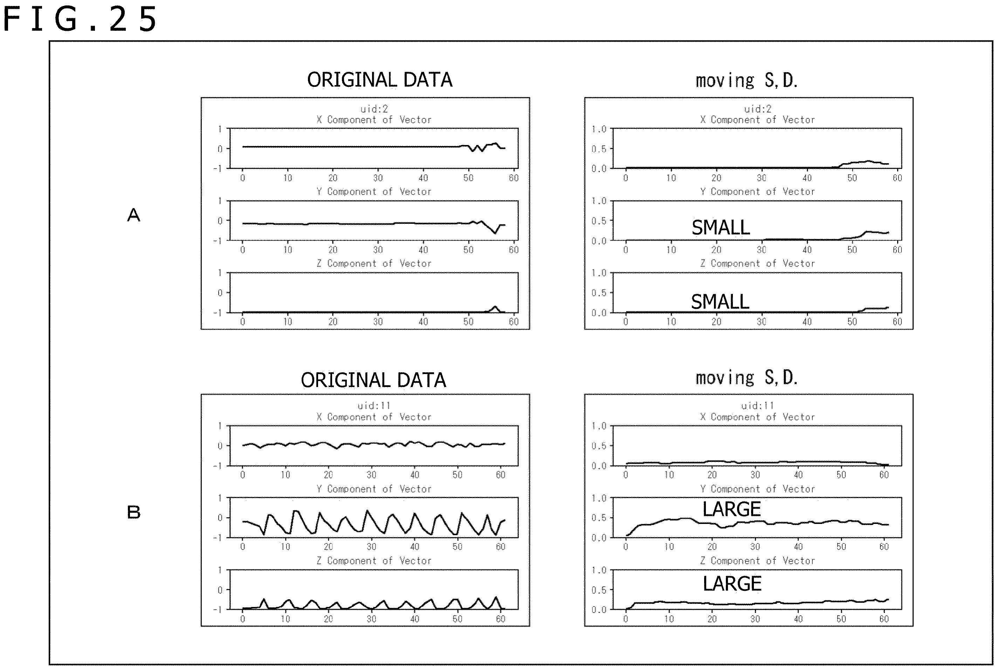

FIG. 25 is a diagram depicting an example of original data and movement standard deviations of a directional vector of a leg.
[FIG. 26]

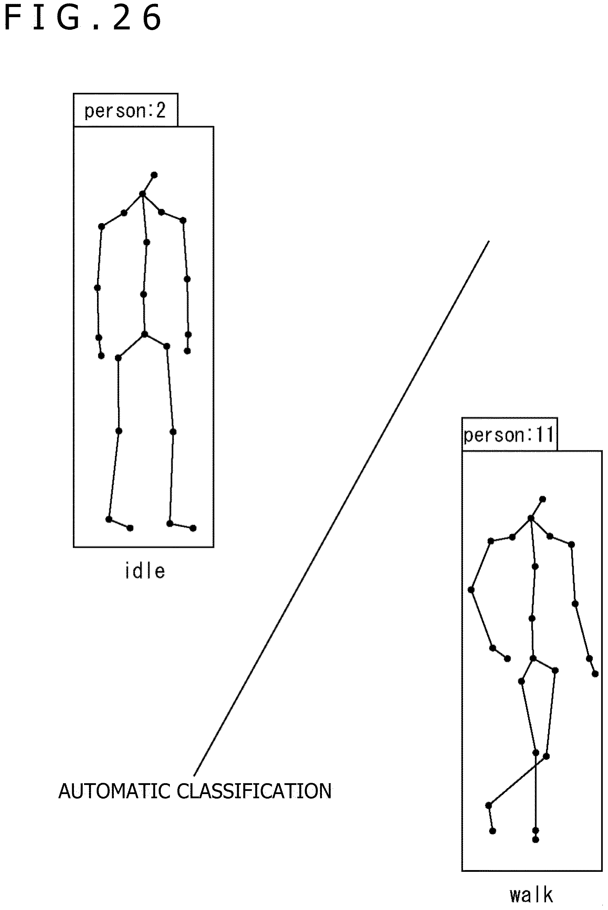

FIG. 26 is a diagram explaining automatic classification into a still posture and a walking posture.
[FIG. 27]

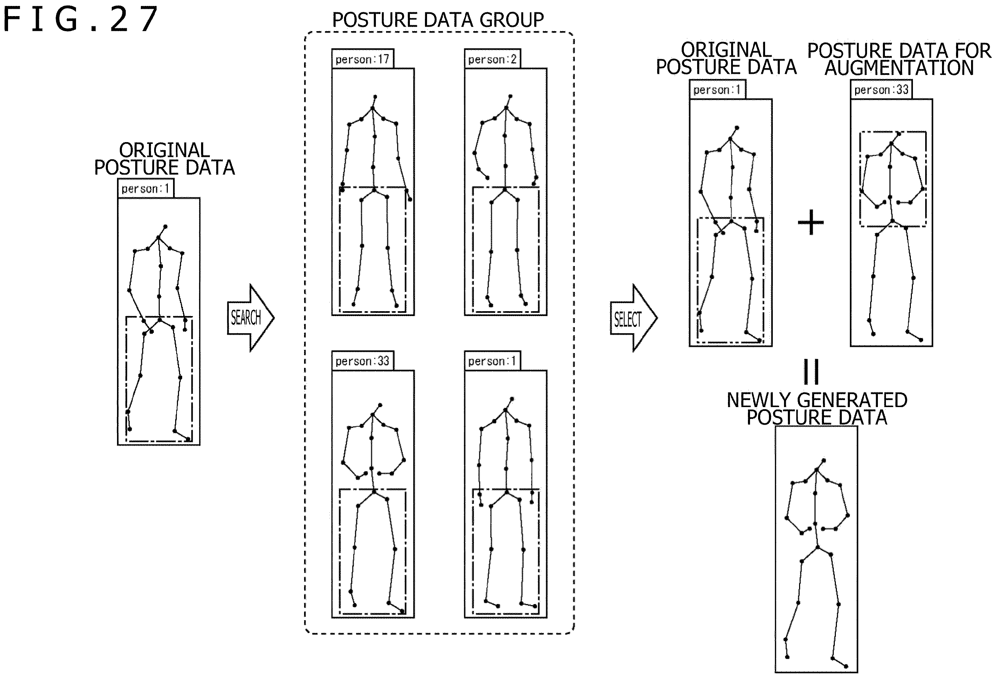

FIG. 27 is a diagram explaining augmentation of posture data.
[FIG. 28]

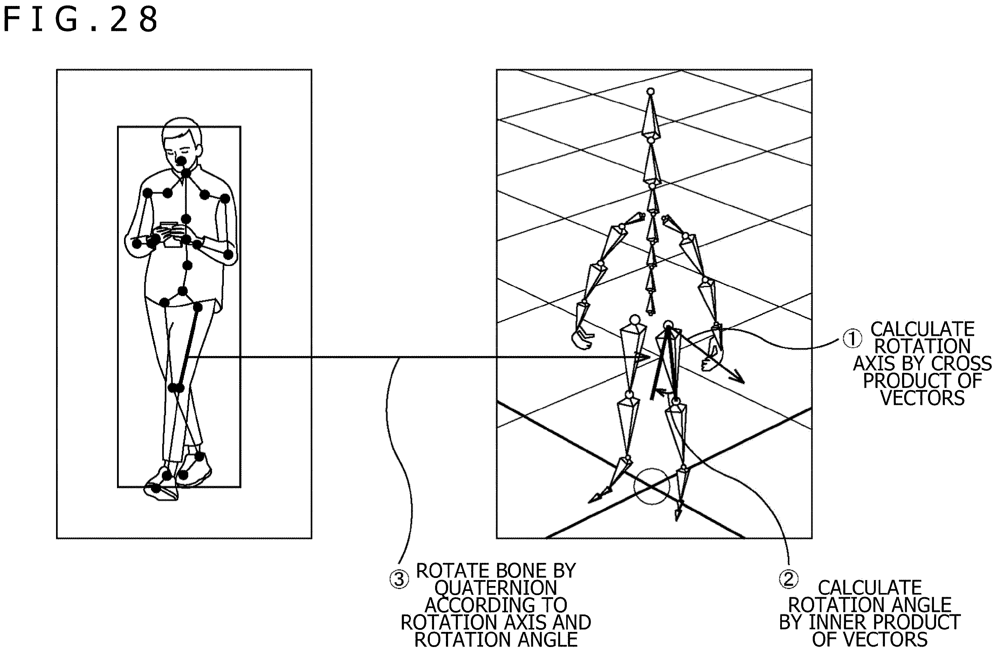

FIG. 28 is a diagram explaining application of posture data to a CG model.
[FIG. 29]

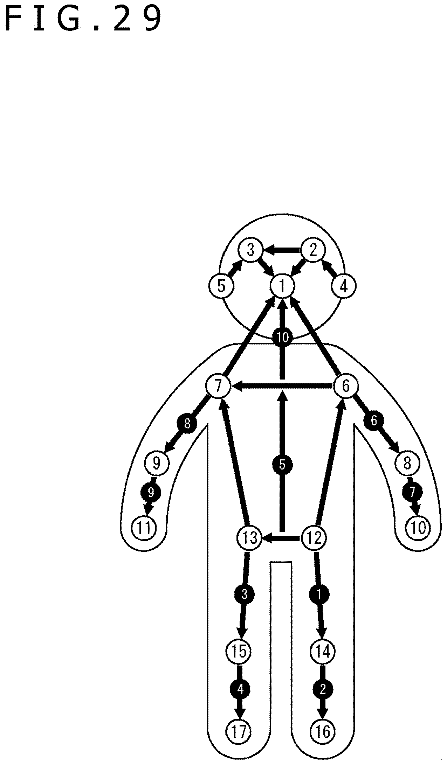

FIG. 29 is a diagram depicting an example of an order of rotation of the directional vectors.
[FIG. 30]

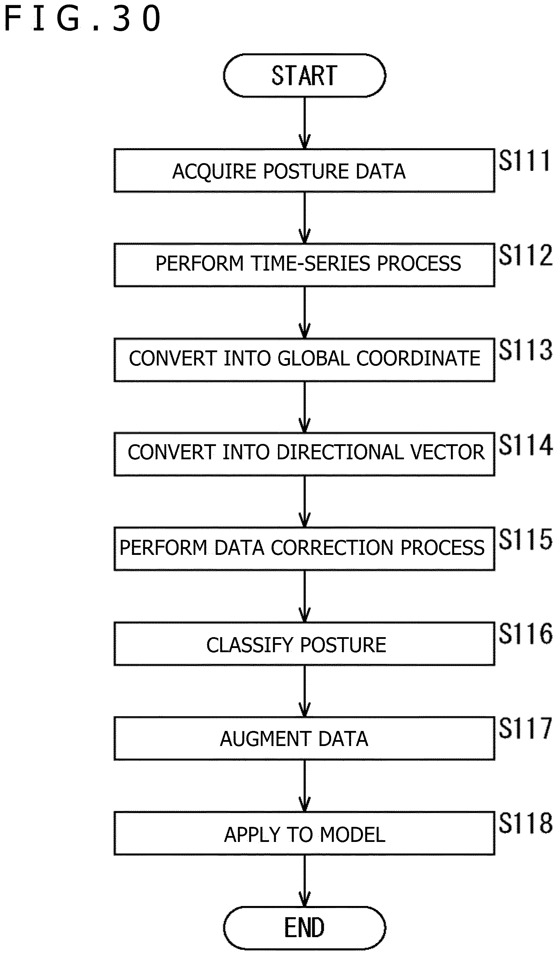

FIG. 30 is a flowchart explaining data processing executed by the data processing device.
[FIG. 31]

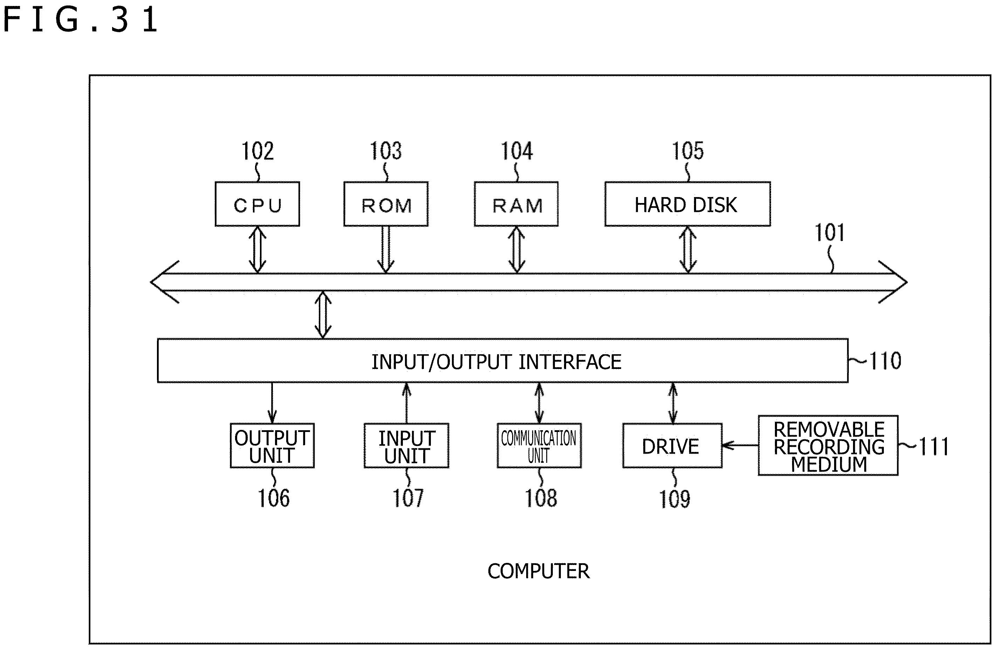

FIG. 31 is a block diagram depicting a configuration example of a computer according to one embodiment to which the present technology is applied.

[Description of Embodiment]

An embodiment according to the present technology will be hereinafter described with reference to the drawings.

<<Data processing system according to present embodiments

FIG. 1 is a block diagram depicting a configuration example of a data processing system according to the embodiment to which the present technology is applied.

A data processing system 1 according to the present embodiment is a system which automatically generates a dataset (CG images and correct data) for leaning, verification, or test of AI (Artificial Intelligence) incorporated in a camera system with use of a 3D-CG (three-dimensional computer graphics: 3Dimensional Computer Graphics) technology. The camera system equipped with AI acquires video images captured by one or multiple cameras (imaging devices). For example, the camera is provided at one or multiple places of a facility such as a store, a station, an amusement facility, a shopping district, and a shopping mall. The camera system having acquired the video images performs an inference process, such as object detection, for the acquired video images with use of AI (Artificial Intelligence) to detect information, such as genders, age groups, and movement routes, associated with users, employees, and the like of the facility (hereinafter referred to as users) for various purposes such as analysis of use situations of the facility and detection of tendencies of particular persons. For example, the camera system is a monitoring camera system which detects tendencies of particular persons on the basis of video images captured by cameras provided at respective places. In the description of the present technology, the camera system is such a camera system which acquires video images captured by cameras equipped in a store such as a department store and a supermarket (hereinafter referred to as a target store or simply as a store). It is assumed that purposes for acquiring video images, and details of the inference process performed by AI incorporated in the camera system are not limited to any specific purposes and details. Moreover, each of datasets (or CG images) for learning, verification, and test of AI will be simply referred to as a dataset for AI learning without distinction between these types of datasets.

The data processing system 1 has a material and behavior generation unit 11, a database 12, and a dataset automatic generation unit 13. Any two or all of the material and behavior generation unit 11, the dataset automatic generation unit 13, and the database 12 thus provided may be included in one device, or each of these components may be provided in a separate device.

The material and behavior generation unit 11 performs a store CG model generation process for generating a CG model imitating a target store (hereinafter referred to as a store CG model) in a manner fit for requirements of the target store, a 3D-CG material selection process for selecting and acquiring a 3D-CG material of a product shelf or the like disposed on the store CG model from the database 12, a behavior data generation process for generating behavior data associated with a posture, a movement, or the like of a person model of a user disposed on the store CG model, a synthetic face and person model selection process for selecting and acquiring the person model disposed on the store CG model and a synthetic face used as the face of the person model from the database 12, and other processes.

The database 12 has 3D-CG materials (person assets) associated with persons (person models) in various modes different in gender, age group, physique, clothing, and the like, 3D-CG materials (product shelf assets) associated with product shelves in various modes for display of different products and the like, data (material data) for giving various modes different in quality feeling, recess-protrusion, coloring, pattern, and the like to a 3D-CG object surface, and 3D-CGs (face datasets) associated with faces (synthetic faces) in various modes. The material and behavior generation unit 11 acquires a 3D-CG material fit for the requirements of the target store from the database 12.

The dataset automatic generation unit 13 generates a 3D (CG) model imitating a state of the target store on the basis of the store CG model, the 3D-CG material, the person model, and the behavior data. The 3D model imitating the state of the target store is a dynamic 3D model which includes a person model imitating an actual store user and having a position and a posture changeable with an elapse of time (a 3D model having a time change) in a store CG model imitating an actual target store (a store CG model where a 3D-CG material associated with a product shelf is disposed). The position and the posture of the person model change according to the behavior data. The dynamic 3D model imitating the state of the target store will be hereinafter referred to as a dynamic store model. The dataset automatic generation unit 13 generates a still 3D model (still store model) disposed on the store CG model and indicating a position and a posture of the person model at each time for each predetermined time interval within a range of a time assumed for imitating the state of the actual target store in a manner of the dynamic store model (hereinafter referred to as an assumed time range of the dynamic store model, e.g., for imitating a state of the target store in an actual time from 12:00 to 12:10, the period from 12:00 to 12:10 corresponds to the range of the assumed time). The dynamic store model is generated by connecting the still store models at respective times in an order of time as a frame constituting the dynamic store model.

Moreover, the dataset automatic generation unit 13 generates, by rendering, a CG image captured by one or multiple virtual cameras disposed on the store CG model every time each frame of the dynamic store model is generated, or for each predetermined frame. The virtual camera may be located at a position corresponding to an actual position of the camera disposed on the target store, or a position other than this position. In this manner, the dataset automatic generation unit 13 forms a large number of CG images of the dynamic store model captured at different times by the virtual camera in the assumed time range of the dynamic store model. All or a part of the CG images thus formed are used as CG images for AI learning. The dataset automatic generation unit 13 generates annotation information which is correct data (or training data) added to the CG images for AI learning on the basis of data (e.g., the position of the person model) used for generating the dynamic store model. In this manner, a dataset for AI learning is automatically generated as a dataset including annotation information given to a large number of CG images for AI learning each imitating an actual image obtained by imaging a state of the actual store. Note that the CG images for AI learning are not only CG images at different times obtained from one dynamic store model, but also CG images acquired from each of dynamic store models in multiple patterns different in person model, movement route for each person model, posture of each person model, assumed time range, or the like.

(Details of processes performed by material and behavior generation unit 11)

(Store CG model generation process)

The store CG model generation process performed by the material and behavior generation unit 11 generates a store CG model imitating a target store on the basis of data obtained by actual measurement (AR measurement) of the target store with use of a 360-degree scanner (measuring device) or the like. The store CG model may be generated on the basis of CAD data. The store CG model may be generated on the basis of a random value, a design value, or a measurement value of a height of a product shelf or the like with respect to a two-dimensional floor map.

(3D-CG material selection process)

The 3D-CG material selection process performed by the material and behavior generation unit 11 selects and acquires a 3D model of a product shelf disposed on the store CG model (product shelf asset) from the database 12 in a manner fit for requirements of the target store. This selection may be made by an operator. The 3D-CG material selection process may select and acquire not only the 3D model of the product shelf, but also 3D models of various articles actually existing in the target store. However, it is assumed that the 3D-CG material to be selected is only a product shelf asset in the description of the present technology.

(Behavior data generation process)

FIG. 2 is a diagram illustrating a flow of the behavior data generation process performed by the material and behavior generation unit 11. Illustrated in a process line branched to an upper part in FIG. 2 is a flow of a process for generating behavior data associated with a posture of a person model (referred to as posture data) (posture data generation process), while illustrated in a process line branched to a lower part is a flow of a process for generating behavior data associated with a movement (referred to as movement data), such as a movement route of the person model, a moving speed on the movement route, and an action at each position on the movement route (movement data generation process).

(Behavior data generation process)

In the posture data generation process, the material and behavior generation unit 11 acquires video images of an interior of a target store (including surrounding areas such as entrances and exits of the store) captured by a camera or cameras actually provided at one or multiple places of the target store. The material and behavior generation unit 11 estimates postures of persons present within the video images by applying AI to the acquired video images, and acquires posture data (posture estimation information) indicating postures associated in time series for each person. Note that the video images for acquiring the posture data may be video images captured at a store having a customer group or a structure similar to those of the target store, for example, and are not required to be video images captured at the target store. Moreover, the posture data to be acquired is three-dimensional data, and may be acquired not only on the basis of video images, but also with use of a device measuring three-dimensional data of a person.

After acquisition of the posture data for each person, the material and behavior generation unit 11 standardizes (normalizes) the posture data, and then calculates motion data representing a motion for each of portions of the persons, such as the head, the arms, the legs, and the waist (portion division process). After completion of the portion division, the material and behavior generation unit 11 increases the number of the posture data by combining the motion data of the respective portions of the multiple persons and generating new posture data (junction). Note that the posture data is classified into types corresponding to actions of the persons, such as posture data indicating a posture during walking (a series of actions) (posture data of a walking posture), and posture data indicating a posture in a still state (posture data of a still posture). For classifying the types of the posture data, the posture data of the still posture can be further divided into types of posture data corresponding to various actions of the persons (person models), such as posture data indicating a posture at the time of a simple stop, posture data indicating a posture for taking a product on an upper row of the product shelf, posture data indicating a posture for taking a product on a lower row of the product shelf, and posture data indicating a posture for paying a charge at a cash register. In this manner, a large number of the types of the posture data corresponding to the respective actions can be generated by the junction described above.

The material and behavior generation unit 11 sets posture data applied to each of the person models after generation of the respective types of the posture data by junction, or on the basis of actions of the respective person models disposed on the store CG model during generation of the posture data. Accordingly, the actions of the respective person models disposed on the store CG model (actions such as walking and stopping) are changeable within the assumed time range of the dynamic store model. For example, a certain person model may change a walking action taken in a period between a first time and a second time to a stopping action in a period between the second time to a third time. These actions of the respective person models are set while the material and behavior generation unit 11 generates movement data for each position of the person models, or for each period of continuation of an identical action, for example. Accordingly, the material and behavior generation unit 11 sets, for each of the person models, posture data of a type corresponding to an action of the person model for each period of continuation of an identical action as posture data to be applied. At this time, the material and behavior generation unit 11 randomly sets, for example, any one of a large number of posture data generated by the junction described above, and of the type corresponding to the action of the person model in each of the periods, and sets the selected data as posture data to be applied in each of the periods. Note that the method for selecting the one posture data applied to the person model from the large number of posture data of the type corresponding to the action of the person model is not limited to random selection, but may be selection without overlapping with data of a different person model, or selection by other methods. Moreover, only a necessary number of the posture data of the type applied to the person model may be generated by the above junction, rather than the large number of posture data generated by the above junction beforehand. Furthermore, multiple posture data included in the large number of posture data of the type corresponding to the action of the person model may be applied to each of the person models to generate multiple dynamic store models in different patterns and form CG images on the basis of the multiple dynamic store models thus generated.

After completion of setting of the posture data to be applied to each of the person models for every one or multiple periods, the material and behavior generation unit 11 changes a bodily shape (bodily features) such as a height included in each of the posture data to a shape fit for a bodily shape of the person model to which the posture data is applied (additional work). The material and behavior generation unit 11 further performs processes in the additional work, such as cleansing for removing unnatural posture data included in the respective posture data, and interpolation for interpolating lacking posture data, as necessary.

FIG. 3 depicts an outline of the posture data generation process. Details of the posture data generation process will be further described below. For obtaining the posture data, a posture of a person represented by 3D data is estimated by AI on the basis of 3D data input to the material and behavior generation unit 11 to acquire 3D posture data as a result of this estimation.

Alternatively, for obtaining the posture data, a posture of a person represented by 2D data is estimated by AI on the basis of 2D data input to the material and behavior generation unit 11 to acquire 2D posture data as a result of this estimation. The 2D posture data is converted into three-dimensional data on the basis of TOF (Time Of Flight) data obtained by a TOF sensor to acquire 3D posture data.

For example, the 3D posture data is represented by three-dimensional coordinates indicating positions of feature points (Keypoints) which are specific joints of a person. The 3D posture data represented by the feature points are converted into posture data represented by a framework (Bone, directional vector described below) connecting the respective feature points (Bone conversion), and then standardized (normalized). The standardization refers to conversion of lengths of respective portions of the framework into standard lengths. This standardization makes it impossible to restore posture data to original posture data. Accordingly, personal information is protectable. In addition to the standardization, the lengths of the respective portions of the framework of the posture data are converted into lengths fit for the bodily shape (bodily features) of the person model to which the posture data is applied, after noise (cleansing), interpolation, and other processes are completed for the posture data. Various posture data can be generated as the posture data by combining posture data acquired from multiple persons. In this manner, more variations of the posture data can be easily produced. Details of the posture data generation process will be described below.

(Movement data generation process)

In the movement data generation process in FIG. 2, the material and behavior generation unit 11 acquires video images captured at multiple places in the target store, and recognizes persons present in each of the video images by using AI. The material and behavior generation unit 11 acquires movement estimation information to estimate movements of the persons on the basis of attributes (e.g., genders), positions, and positional changes of the persons recognized in each of the video images.

After acquiring the movement estimation information, the material and behavior generation unit 11 acquires various types of statistics associated with the target store on the basis of the movement estimation information. The types of the statistics to be acquired will be touched upon herein. Initially, it is assumed that users using the target store are classified into user groups (customer groups) such as groups of a single male, a single female, a couple, a husband and wife couple, a family with children, a large party, and the like. In addition, it is assumed that all of the statistics are values contained in the assumed time range of the dynamic storage model. In this case, following specific examples are considered as the types of the statistics to be acquired. A first statistic is a proportion of each user group in all the users of the target store. A second statistic is a distribution of population density of users at respective places of the target store (respective places such as store entrances (room entrances), store exists (room exits), and passages). The second statistic may be a distribution of population density for each user group, a distribution of population density for all the users including all the user groups, or both of these distributions. A third statistic is a movement speed of the users (average movement speed), and a variance of this speed. The third statistic may be a movement speed and a variance of this speed for each of the places of the target store. In addition, the third statistic may be a movement speed and a variance of this speed for each user group, a movement speed and a variance of this speed for all the users including all the user groups, or both of these movement speeds and variances. A fourth statistic is a rate (probability) of a visit to a particular place, such as respective selling areas, by the users of the target store. The fourth statistic may be either a rate for each user group, or a rate for all the users. The first to fourth statistics described above are presented only by way of example, and the types of the statistics are not limited to these statistics. Information associated with users who actually use (move in) the target store is chiefly acquired as the statistics. In addition, the statistics are not limited to those acquired on the basis of the movement estimation information obtained from the video images, but may be statistics provided by an owner or the like of the target store, or acquired by any methods.

After acquiring the statistics, the material and behavior generation unit 11 forms various movement routes for the users moving in the target store, i.e., a large number of the person models moving on the store CG model (population flow of a crowd) by using a floor map of the target store (a map indicating passages through which the users are movable), and an A* algorithm and a technology of game AI (multi-agent simulation).

FIG. 4 is a diagram depicting a typical floor map indicating places of various selling areas of the target store in a left part, and a floor map indicating entrances (room entrances), exits (room exits), entrances/exits (room entrances/exits), and passages (walking paths) through which the users (person models) are movable in the target store in a right part. The material and behavior generation unit 11 limits positions for entering the store and positions for leaving the store for the respective person models, and passages (places) through which the person models are movable on the basis of the floor map presented in the right part of FIG. 4, and automatically forms movement routes of the respective person models by using the A* algorithm and the multi-agent simulation. A specific example of a process for generating the movement routes with use of the A* algorithm and the multi-agent simulation will be described below. For example, a movement route for moving from an entrance S to an exit G of the store via the first to third positions as sequential waypoints is formed as depicted in FIG. 5.

Moreover, the material and behavior generation unit 11 also generates various data associated with movements along the movement routes simultaneously with generation of the movement routes of the person models. For example, the various data associated with the movements along the movement routes include attributes (e.g., gender) of each of the person models moving along the movement routes, a time at which each of the person models moving along the movement routes enters the store through the entrance (or entrance/exit) and a time at which this person leaves the store through the exit (or entrance/exit), a movement speed (a position at each time) during movement along each of the moving routes, a stay period at each of the waypoints, and the like. Note that the various data associated with the movements along the movement routes will be referred to as movement data (including the movement routes).

For generating the movement data of the respective person models, the material and behavior generation unit 11 reflects the statistics in the movement data. For example, the proportion of each user group as the first statistic is reflected in the attributes of each of a large number of the person models entering the target store (moving along the respective movement routes). The movement speed of each of the users (average movement speed) and a variance of this speed as the third statistic are reflected in the movement speed during movement along the movement route. The rate (probability) of each of the visits to the particular places as the fourth statistic is reflected in the waypoint of the movement route.

After generation of the movement data of the large number of person models, the material and behavior generation unit 11 selects any movement data (movement routes) from these movement data (movement routes) to make adjustment and achieve equality or similarity to the statistics (extraction in FIG. 2). For example, the material and behavior generation unit 11 selects the movement data exhibiting equality or similarity to the distribution of the population density as the second statistic, and provides the selected movement data as a movement data generation result.

(Specific example of movement data generation process)

For example, the material and behavior generation unit 11 uses the A* algorithm and the multi-agent simulation in the movement data generation process. In a case where the target store is a store of a type such as a department store and a supermarket, members of a group visiting the target store together usually take actions together. Meanwhile, for generating accurate movement data for each person model, accurate position information is required for each person. Accordingly, rough simulation of a movement route is calculated using the A* algorithm for each group. At this time, waypoints within the target store are set according to attributes of each group.

However, the A* algorithm requires calculation for each of divided grids of a map. In this case, calculation is quickly completed, but accurate position information is difficult to compute. Moreover, route re-calculation needs to be repeatedly made because obstacles (e.g., other users) within the target store are changeable at any time.

Accordingly, movements for each person are calculated using the multi-agent system (multi-agent simulation). The muti-agent simulation calculates and adds "Alignment," "Cohesion," and "separation" to form detailed routes for allowing members of a group to move together in the same direction while leaving a certain distance between the individual members. Calculation of the multi-agent system requires a vector (movement vector) which roughly represents a moving direction of the group beforehand. A combination of the A* algorithm and the multi-agent system achieves calculation of accurate positions, directions, and acceleration rates necessary for generation of accurate movement data of the person models, and not causing collisions with others while reflecting attributes for each group in movement route.

FIGS. 6 to 8 are flowcharts illustrating an example of procedures for calculating movement routes of person models with use of a combination of the A* algorithm and the multi-agent system (movement data generation process). In step S11 in FIG. 6, the material and behavior generation unit 11 initializes a map (floor map). Specifically, as depicted in the floor map in the left part of FIG. 4, a floor map of a target store (store CG model) is generated as a map defining positions (entrances or entrances/exits) through which each person model is allowed to enter the store, positions (exits or entrance/exits) through which each person model is allowed to leave the store, and passages (places) through which each person model is movable. The process advances from step S11 to step S12.

In step S12, the material and behavior generation unit 11 sets attributes of each group, and attributes of each person (person model) constituting the group. Specifically, the material and behavior generation unit 11 designates the persons (person models) entering the target store as members of each group, and assumes that a large number of groups enter the target store. The person models will be hereinafter also referred to as persons. In this case, it is assumed that a single person is also handled as a member of a group. For example, the attributes of each group include a user group of the target store. The material and behavior generation unit 11 sets any one of a single male, a single female, a couple, a husband and wife couple, a family with children, and a large party for each group entering the target store as an attribute of the group. Moreover, the material and behavior generation unit 11 sets attributes for each person who is a member constituting each group. For example, the attributes of each person include his or her gender and age group. For setting these attributes for each group and person, the material and behavior generation unit 11 reflects a statistic in the setting. For example, suppose that rates (numbers) of male users and female users using (visiting) the target store for each age are obtained as statistics as depicted in FIG. 9. Note that values in FIG. 9 are statistics contained in the assumed time range of the dynamic storage model. In this case, the material and behavior generation unit 11 sets attributes of each person such that the rates of the males and the females in the respective persons entering the target store for each age group are equal or similar to the statistics. Moreover, the material and behavior generation unit 11 assumes that these persons have entered the store as a group, and designates each person as a member of any one of the single male group, the single female group, the couple group, the husband and wife couple group, the family with children group, and the large party group on the basis of the attributes of each person to set the attributes of each group.

Note that the number of the persons entering the target store may be set to a number reflecting the statistic, or may be set according to a calculation capability of the material and behavior generation unit 11. In this case, the rate of each attribute of the persons may be set to a rate equal or similar to the statistic. Moreover, the method for setting the attributes of each group or each person is not limited to a specific method. For example, simple setting may be made according to typical tendencies. Specifically, the attributes of each person may be set such that the number of females increases in the daytime in a case where the target store is a supermarket, and the attributes of each group may be set such that the numbers of couples and families increase in a case where the target store is a department store. Moreover, in a case where the rate of the group entering the store has been acquired as the statistic for each of the single male group, the single female group, the couple group, the husband and wife group, the family with children group, and the large party group, the attributes of each group may be set such that each rate is equal or similar to the statistic. The process advances from step S12 to step S13 in FIG. 6.

In step S13, the material and behavior generation unit 11 determines an update order of the movement routes for each group. For example, assuming that the groups entering the target store are the first to Nth (N: positive integer) groups, and that the movement routes of the respective groups are the first to Nth movement routes, the material and behavior generation unit 11 determines the update order of the first to Nth movement routes. In the present process, it is assumed that the update order is set to an order from the first to Nth numbers given for identifying the groups and the movement routes. The process advances from step S13 to step S14.

In step S14, the material and behavior generation unit 11 determines whether or not a simulation time is shorter than a total time. The simulation time refers to an elapsed time after the number of times of repetition of a movement for a unit time from a start of simulation for moving each group by a predetermined unit time (the unit time x the number of times). The simulation time corresponds to an elapsed time from a start time of the assumed time range of the dynamic store model. The total time represents a simulation time at an end of the movement of each group for each unit time in the simulation, and corresponds to an elapsed time from the start time of the assumed time range of the dynamic store model until an end time.

In an affirmative case in step S14, the process advances to step S15. In step S15, the material and behavior generation unit 11 calculates a movement route for each group (route calculation for each group). Details of the route calculation for each group will be described with reference to the flowchart in FIG. 7. The route calculation for each group calculates a route of movement by each group for the unit time. The process advances from step S15 to step S16.

In step S16, the material and behavior generation unit 11 adds the unit time to the current simulation time to update the simulation time. The process returns to step S14 from step S16 to repeat steps S14 to S16. In a negative case in step S14, the present process ends.

An example of the procedures for the route calculation for each group in step S15 will be described herein with reference to the flowchart in FIG. 7. In step S31, the material and behavior generation unit 11 sets a movement route (group) corresponding to a target of the route calculation. Specifically, the material and behavior generation unit 11 sequentially switches between the first to Nth movement routes as the target of the route calculation according to the update order of the movement routes set in step S13 in FIG. 6 (the first to Nth movement routes) every time the processing in step S31 herein is repeatedly executed. Incidentally, it is assumed herein that the target movement route (group) is an nth movement route (group). The process advances from step S31 to step S32.

In step S32, the material and behavior generation unit 11 updates a state change. Specifically, the material and behavior generation unit 11 updates a state (position and acceleration) of each of persons corresponding to members of groups other than the nth group corresponding to the current target of the route calculation to a latest state. The process advances from step S32 to step S33.

In step S33, the material and behavior generation unit 11 acquires respective positions of persons (persons of groups other than the nth group) existing around a position of the nth group (within a predetermined distance). For example, the position of each of the groups (group position) represents the center of gravity of positions of all persons constituting this group. The process advances from step S33 to step S34.

In step S34, the material and behavior generation unit 11 searches a route from a current position (current location) of the nth group to a destination (calculates a shortest movement route) by using the A* algorithm. The A* algorithm is an algorithm for searching a shortest movement route in any movement routes in a case of a movement from a current location to a destination via a movable region (passage). Moreover, in a case where a waypoint through which a person is required to pass to reach the final destination is present, the A* algorithm searches a shortest movement route which starts from the current location and passes through the waypoint, and then reaches the destination. The material and behavior generation unit 11 searches a shortest movement route from the current location of the nth group to an exit or an entrance/exit corresponding to the final destination on the floor map depicted in the right figure of FIG. 4. At this time, the passages on the floor map are defined as movable regions. However, the positions of the surrounding persons acquired in step S33, and areas near these positions (within a predetermined distance) are excluded from the movable regions.

In this step, the material and behavior generation unit 11 calculates the route for each of the groups by using the A* algorithm, and therefore sets a start position of the movement (movement route) and an end position (destination) for each of the groups. The start position of the movement is set to a position of any entrance or entrance/exit on the floor map, while the destination is set to a position of any exit or entrance/exit on the floor map. In a case where multiple candidates are present for the entrance, the exit, and the entrance/exit which may become the foregoing start position and destination, the positions of the candidates randomly selected from these candidates are set as the start position and the destination, for example. However, in a case where a rate of persons entering or leaving the store is acquired as a statistic from each of these candidates, this statistic may be reflected in the setting of the start position and the destination of the movement of each of the groups. The material and behavior generation unit 11 also designates a randomly selected time, or a time reflecting a statistic as a time for starting the movement from the start position (simulation time) along with the setting of the start position of the movement of each of the groups.

Moreover, the material and behavior generation unit 11 sets a waypoint for each of the groups. However, there may exist a group for which no waypoint is set. For setting the waypoint for each of the groups, one or multiple candidates may be randomly selected as a waypoint or waypoints from candidates which may become waypoints, such as respective selling areas within the target store, or statistics may be reflected in the setting. For example, a probability of a visit to each tenant or selling area within the target store is variable according to each attribute of the respective groups. Similarly, a probability of a visit to each of individual tenants (e.g., further detailed brands and selling areas of manufacturers) is variable for each attribute of the groups. FIG. 10 is a diagram illustrating an example of probabilities (rates) of visits to a food selling area, a brand-name product selling area, a toy selling area, and a restaurant in a case where these values are obtained as statistics for each attribute of the groups. According to this figure, for example, statistics of 30%, 20%, 80%, and 70% are obtained for the family with children group as probabilities of visits to the food selling area, the brand-name product selling area, the toy selling area, and the restaurant, respectively. Accordingly, the material and behavior generation unit 11 sets the food selling area, the brand-name product selling area, the toy selling area, and the restaurant as waypoints for 30%, 20%, 80%, and 70%, respectively, of the family with children groups entering the target store. In this manner, waypoints reflecting statistics can be similarly set for the groups having different attributes.

In addition, the waypoints are classified into a definite type corresponding to a shopping purpose, and a simple passing point type existing as only a passing point during window shopping or the like. The material and behavior generation unit 11 sets only definite waypoints for each of the groups, and also sets a time (stay time) for staying at each of these waypoints. At this time, 0 may be set as a stay time to explicitly set waypoints corresponding to passing points.

A statistic may be reflected in each of the waypoints as only passing points existing only for passing on an influence map. The influence map is an influence level distribution map which defines weighting factors (influence levels) corresponding to respective positions of the target store in a case where calculation is weighted for each of route lengths (movement distances). For example, suppose that an actual length (actual route length) of a movement route connecting a point A and a point B within the target store is L, and that a degree of an influence level defined for each of positions provided on this movement route is a constant k. In this case, the A* algorithm recognizes a route length of this movement route as $k \cdot L$. In a case where the degree of the influence level defined for each of the positions on the movement route is variable, a value obtained by integrating $k \cdot \Delta$

L calculated for each small length $\Delta L$ along the movement route, i.e., a value obtained by integrating the degree of the influence level k along the movement route, is recognized as the route length, for example. In this case, a route length (hereinafter also referred to as cost) considering the influence map for the actual route length increases as the movement route passes through the position having the larger influence level k. The A* algorithm searches a movement route minimizing the cost. Accordingly, a position having a higher influence level defined by the influence map for the target store is less likely to become a passing point of the movement route, while a position having a lower influence level is more likely to become a passing point of the movement route.

The material and behavior generation unit 11 sets the foregoing influence map such that statistics are reflected for each of the attributes of the groups, or for each of the groups. For example, the material and behavior generation unit 11 sets the influence map such that the family with children group is more likely to pass through a toy selling area as a passing point. The material and behavior generation unit 11 sets the influence map such that the single female group is more likely to pass through areas such as a brand-name product selling area and a confection area as passing points.

As for other examples of the influence map, if the influence map having a lower influence level for a range of a wedding corner is set for the couple group, for example, a movement route passing through the wedding corner is more likely to be formed. If the influence map having a higher influence level for a range of a cosmetic product selling area is set for the single male group, a movement route avoiding the cosmetic product selling area is more likely to be formed. Moreover, such an influence map which has influence levels different for each movement direction may be set. In this case, for example, the influence map having a lower influence level (e.g., approximately one tenth) for a movement in a correct direction toward a cash register corner than an influence level for a movement in a different direction (opposite direction) is set for each of directions. In this case, a movement route for moving in the direction opposite to the cash register corner is unlikely to be formed. Furthermore, the influence map may be a map changeable with time. For example, for searching a movement route from a current location to a destination for a certain group at a certain time, population density (density of persons or groups) at respective positions of the target store is calculated on the basis of movement routes searched for other groups at that time, and such an influence map having a higher influence level for a position having higher population density is set. In this case, the movement route of each of the groups is updated with every elapse of the unit time, and the influence map similarly changes with every elapse of the unit time. Accordingly, the influence map to be set is such a map where a movement route avoiding a position having higher population density is more likely to be formed. In addition, in a case where multiple factors influencing determination of passing points are taken into consideration, the influence map to be set may designate, as an influence level, a sum or a weighted sum of influence levels at respective positions on multiple influence maps corresponding to the respective factors.

In step S34 in FIG. 7, the material and behavior generation unit 11 searches (calculates) a movement route reaching the destination from the current location via the waypoint set for the nth group with use of the A* algorithm on the basis of cost considering the influence map. The process advances from step S34 to step S35.

In step S35, the material and behavior generation unit 11 calculates a movement route for each person who is a member constituting the nth group (route calculation for each person). Details of the route calculation for each person will be described with reference to the flowchart in FIG. 8. The route calculation for each person calculates a route on the basis of movement of each person for a unit time. The process advances from step S35 to step S36.

In step S36, the material and behavior generation unit 11 determines whether or not the processing from step S32 to step S35 has been completed for the movement routes of all the groups (the first to Nth groups). In a negative case in step S36, the process returns to step S31 from step S36 to set a movement route of the (n+1) group as a target of the route calculation and perform the processing from step S32 to step S35. In an affirmative case in step S36, the process advances to step S16 in the flowchart in FIG. 6.

An example of the procedures of the route calculation for each person in step S35 in FIG. 7 will be described with reference to the flowchart in FIG. 8. In step S51, the material and behavior generation unit 11 sets a movement route of a person corresponding to a target of the route calculation in the respective persons of the nth group which is the current target of the route calculation in step S35. Specifically, the material and behavior generation unit 11 sequentially switches between the movement routes of the respective persons, who are the members constituting the nth group, as the target of the route calculation every time the processing in the present step S51 is repeatedly executed. Note that the movement route of the person corresponding to the target of the route calculation will be also simply referred to as a target person. The process advances from step S51 to step S52.

In step S52, the material and behavior generation unit 11 acquires a current position and acceleration (including direction information) as a current transition state of the target person. The process advances from step S52 to step S53.

In step S53, the material and behavior generation unit 11 acquires positions of persons existing around the current position of the target person (within a predetermined distance). The process advances from step S53 to step S54.

In step S54, the material and behavior generation unit 11 acquires a movement vector of the nth group. The movement vector represents a movement direction indicated by the movement route of the nth group obtained by the search in step S34 in the flowchart in FIG. 7 with respect to the current location of the nth group. For example, the position of the group represents the center of gravity of positions of the respective persons constituting the group. The process advances from step S54 to step S55.

In step S55, the material and behavior generation unit 11 calculates a position of the target person after an elapse of a unit time with use of the multi-agent system (multi-agent simulation) on the basis of the current position and the acceleration acquired in step S52, and a current movement speed (including information indicating a moving direction).

Here, in a case where an average movement speed and a variance of this speed have been acquired as statistics for each attribute of the groups herein, the material and behavior generation unit 11 sets a movement speed (a movement speed to which a speed variation produced by the variance is added) corresponding to the attributes for each of the groups and reflecting the statistics as an initial speed of each of the persons constituting the corresponding group. However, the initial speed may be set without consideration of the statistics. The multi-agent simulation process in the present step S54 is repeatedly executed. In this manner, own acceleration is added to each of the persons, and the current movement speed of each of the persons is determined.

Moreover, the material and behavior generation unit 11 calculates acceleration of the target person after an elapse of the unit time on the basis of a movement vector of the nth group acquired in step S54, and the positions of the persons present around the target person acquired in step S53.

According to the multi-agent simulation performed herein, acceleration added to the target person is calculated in consideration of an action of "Alignment" for aligning a movement speed of the target person with movement speeds and directions of the surrounding persons, an action of "Cohesion" for cohering the target person with the position of the center of gravity of the group to which the target person belongs, and an action of "separation" for separating the target person from the surrounding persons. This calculation can form a detailed route for allowing the members of the group to move together in the same direction while leaving a fixed distance between the individual members. Calculation of the multi-agent system requires a vector (movement vector) which roughly represents a moving direction of the group beforehand.

EP 4 471 726 A1

By combining the A* algorithm and the multi-agent system, calculation of accurate positions, directions, and acceleration rates necessary for generation of accurate movement data of the person models, and not causing collisions with others is achievable while reflecting the attributes for each group in the movement route.

The position and the acceleration of the target person calculated in the foregoing step S55 are updated as the current position and acceleration of the target person after an elapse of the unit time. The process advances from step S55 to step S56.

In step S56, it is determined whether or not the route calculation from step S52 to step S55 has been completed for all the persons constituting the nth group. In a negative case in step S56, the process returns to step S51 from step S56 to switch the target person and perform the processing from step S52 to step S35. In an affirmative case in step S56, the process advances to step S36 in the flowchart in FIG. 7.

The movement routes of the respective person models are formed by connecting the positions of the respective persons constituting the respective groups and moving for each unit time according to the process illustrated in the flowcharts in FIGS. 6 to 8 described above. In addition, a movement speed at the position of each of the person models, and a stay time at each waypoint are obtained in association with each of the movement routes, and movement data of the person models is generated. Note that the route calculation for each person illustrated in the flowchart in FIG. 8 requires a large volume of computation. Accordingly, the route calculation for each person may be carried out for the persons constituting the group only in a case where the position of the group come into a partially limited region of the target store.

Furthermore, the material and behavior generation unit 11 reproduces a state where respective groups or respective persons indicated by circles on the floor map as depicted in A of FIG. 11 are moving along the movement routes during execution of the movement data generation process in the flowcharts in FIGS. 6 to 8, or after generation of the movement data, and generates a heat map indicating a distribution of population density on the basis of the positions of the respective groups or the respective persons as depicted in B of FIG. 11. For example, the operator can check whether the state of the generated heat map and the state of statistics of population density at the respective places in the target store are equal or similar to each other by comparison between the respective states. In a case where the respective states are different, the movement data is again generated after reducing the groups (extraction of the movement routes), or changing various factors for generating the movement data, such as the attributes, the movement speed, the waypoint, and the stay time at the waypoint of each of the groups. In this manner, the heat map and the statistics can be made equal or similar to each other. Furthermore, movement data in a large number of patterns may be generated by changing the various factors for generating the movement data.

The material and behavior generation unit 11 sets movement routes of the respective person models, and positions and movement speeds of the respective person models at respective times as movement rule settings on the basis of the generated movement data. Moreover, the material and behavior generation unit 11 also sets actions of the respective person models at respective positions (or respective times) as the movement rule settings. For example, the movement rule settings include a walking action for the position (period) of the movement of the person model, an action for taking a product on an upper row of a product shelf, an action for taking a product on an upper row of a product shelf, an action for viewing a product shelf, or the like for a position corresponding to a waypoint (a stay period at the way value), and other actions.

(Synthetic face and person model selection process)

In the synthetic face and person model selection process, the material and behavior generation unit 11 selects and acquires person models fit for attributes set for the respective persons during the movement data generation process from person assets included in the database 12 in FIG. 1. For example, in a case where a gender, an age (group), a bodily shape, or the like are set as attributes, the person models fit for these attributes are acquired from the database 12. The selection of the person model may be made by the operator. For synthetic faces to be synthesized for the respective person models, the material and behavior generation unit 11 similarly selects and acquires synthetic faces fit for attributes set for the respective persons from face data sets included in the database 12 in FIG. 1. Note that selection or the like of the synthetic face synthesized for each of the person models will not be explained hereinafter.

(Fitting process)

FIG. 12 is a diagram illustrating a fitting process performed by the material and behavior generation unit 11. The material and behavior generation unit 11 allocates person models (person assets) acquired by the synthetic face and person model selection process as persons who move along the respective movement routes formed by the movement data generation process described above.

The material and behavior generation unit 11 sets, as an asset arrangement rule, product shelf assets and material data acquired from the database 12, positions at which the acquired product shelf assets are arranged for the store CG model, positions to which the acquired material data is applied, and lighting conditions on the basis of a selection

12

operation performed by the operator or CAD data.

Moreover, the material and behavior generation unit 11 sets, as the asset arrangement rule, positions at which the person models moving along the respective movement routes are arranged for the store CG model in accordance with the movement rule setting produced by the movement data generation process described above.

Furthermore, the material and behavior generation unit 11 provides Keyframe setting for giving a movement corresponding to posture data generated by the posture data generation process described above for each of the person models. Specifically, the material and behavior generation unit 11 generates a dynamic person model given a change of a posture of the person model for each frame according to posture data corresponding to an action such that an action at each position (or each time) becomes an action set as the movement rule setting for each of the person models moving along the respective movement routes. For example, generated for a position (or period) where a person model is moving is a person model whose posture changes according to posture data of a walking posture corresponding to a walking action of this person model. In a case where the position of the person model is located at a waypoint, generated is such a person model whose posture changes according to posture data corresponding to an action for taking a product on an upper row of a product shelf, an action for taking a product on an upper row of a product shelf, or the like, for example.

The material and behavior generation unit 11 supplies the store CG model, the asset arrangement rule, and the Keyframe setting described above to the dataset automatic generation unit 13.

(Process by dataset automatic generation unit 13)

The dataset automatic generation unit 13 in FIG. 1 includes a procedural modeling unit 31, a CG rendering unit 32, an automatic annotation unit 33, and a storage unit 34. FIG. 13 depicts data exchange between the procedural modeling unit 31, the CG rendering unit 32, and the automatic annotation unit 33, and will be referred to as necessary.

The procedural modeling unit 31 achieves modeling according to the store CG model, the asset arrangement rule, and the Keyframe setting received from the material and behavior generation unit 11, and generates a dynamic store model where positions and postures of respective person models in the store CG model are changeable for each frame. Rendering (purpose) information used for rendering of the generated dynamic store model (see FIG. 13) is supplied to the CG rendering unit 32 for each frame. Three-dimensional coordinate information associated with a generated 3D model such as a person model (three-dimensional coordinate information associated with the dynamic store model for each frame) is supplied to the automatic annotation unit 33. Information such as lighting conditions necessary for rendering is contained in the asset arrangement rule, and supplied from the procedural modeling unit 31 to the CG rendering unit 32 as rendering information.

The CG rendering unit 32 performs a rendering process on the basis of the rendering information received from the procedural modeling unit 31 to form a CG image captured by a virtual camera and indicating the 3D model generated by the procedural modeling unit 31, and stores the formed CG image in the storage unit 34. The position of the virtual camera (viewpoint position) may be set by the operator, or may be determined beforehand and contained in the asset arrangement rule. The CG image formed by the CG rendering unit 32 is used as image data for AI learning.

The automatic annotation unit 33 generates annotation information, which is to be added to the CG image (image data for AI learning) formed by the CG rendering unit 32, on the basis of three-dimensional coordinate information and the like received from the procedural modeling unit 31. Items included in the annotation information are variable according to a type of recognition (or detection) of AI for learning. Examples of the type of recognition of AI (referred to as a type of annotation) include image classification, object detection, semantic segmentation, instant segmentation, panoptic segmentation, and posture estimation (Pose or Keypoints). Examples of the type of recognition by AI further include behavior analysis based on postures of persons, and recognition of attributes of persons (attributes of faces or bodies). These items of annotation information can be acquired from information such as the asset arrangement rule and the Keyframe setting used at the time of generation of the 3D model by the procedural modeling unit 31, and a position and a range of an angle of view (focal distance and imaging direction) of the virtual camera included in the rendering unit 32 and having captured the CG image. Accordingly, the necessity of acquiring the annotation information from the CG image formed by the CG rendering unit 32 is eliminated.

The automatic annotation unit 33 generates following annotation information according to the type of annotation. In a case where the type of annotation to be generated is image classification, the annotation information is associated with an object type (class) corresponding to a recognition target within the CG image. In a case where the type of annotation is object detection, the annotation information is associated with a type (class) of a recognition target within the CG image, and information for specifying coordinates of a bounding box surrounding this recognition target on the CG image (e.g., coordinates of four corners). In a case where the type of annotation is semantic segmentation, instant segmentation, or panoptic segmentation, the annotation information is associated with a type (class) of a recognition target to which respective pixels of the CG image belong. When pixels belonging to an identical object type belong to different objects in a situation where the type of annotation is instant segmentation or panoptic segmentation, the annotation information also includes this information (instance). In a case where the type of annotation is posture estimation, the annotation information is associated with three-dimensional coordinates of feature points such as joints of a person (person model) within the CG image. In a case where the type of annotation to be generated is behavior analysis, the annotation information is associated with a type of behavior (behavior label) based on a posture of the person within the CG. In a case where the type of annotation is recognition of attributes of a person, the annotation information is associated with attributes of the person within the CG image.

In a case where the type of annotation is object detection, semantic segmentation, instant segmentation, or panoptic segmentation, the automatic annotation unit 33 generates, as the annotation information, a CG image which includes information (e.g., color information) for identifying the type or the object of the recognition target to which the bounding box or the respective pixels belong, and synthesized on the CG image (on two-dimensional coordinates) formed by the CG rendering unit 32. In a case where the type of annotation is posture estimation, the automatic annotation unit 33 forms, as the annotation information, a CG image including feature points, a framework connecting the feature points, and the like detected by posture estimation, and synthesized on the CG image (on two-dimensional coordinates) formed by the CG rendering unit 32.

The CG image formed by the CG rendering unit 32, and the annotation information generated by the automatic annotation unit 33 in correspondence with this CG image are associated with each other and stored in the storage unit 44 as one data of datasets for AI learning. As depicted in FIG. 13, a developer 41 of AI incorporated in the camera system used by the target store performs AI learning (learning, verification, and test) by using the datasets for AI learning generated by the dataset automatic generation unit 13. Note that the automatic annotation unit 33 may simultaneously generate annotation information corresponding to multiple types of annotation.

The data processing system 1 according to the present embodiment described above is capable of creating a large volume of various scenes associated with facilities in an actual space as realistic CG images, and thus capable of reducing labor and time required for this purpose. Particularly, positions of persons contained in each of the CG images are defined on the basis of a result of simulation imitating an actual population flow in a target store. Accordingly, realistic CG images can be formed. Moreover, postures of the persons contained in each of the CG images are postures corresponding to actual actions in the target store. Accordingly, CG images to be formed are realistic images. Furthermore, the formed CG images are available as datasets for AI learning, and therefore annotation for the CG images can be also generated without labor. Accordingly, a large volume of datasets for AI learning can be easily generated. Note that a necessary number of CG images (and annotation information) for AI learning are not limited to CG images formed at different times or different viewpoints for a dynamic store model, but may be CG images (and annotation information) formed on the basis of dynamic store models in multiple patterns generated in different conditions. In addition, the necessary number of CG images for AI learning are not limited to a specific number of CG images, but may be a large number of CG images, such as a number approximately from 10,000 to 100,000 of CG images, and a number more or fewer than this range of CG images.

While described in the present embodiment has been a case for forming CG images imitating states of the store, the present technology is applicable not only to stores, but also to a case for forming CG images imitating states of any facilities (or under any environments), and a case for forming datasets for AI learning using formed CG images. Moreover, while the dynamic store model is generated as a 3D model (dynamic facility model) for forming a necessary number of CG images for AI learning in the present embodiment, the CG images formed using the dynamic store model may be used for any use applications for forming realistic CG images (two-dimensional images). For example, the CG images formed by the dynamic store model may be used as material for investigating positions, lighting conditions, and the like of cameras actually disposed in a store (facility) as cameras for providing video images for the camera system, or may be used for visually recognizing states of users within the facility (e.g., states of population flows within the facility, crowded levels at respective places) on the basis of moving images constituted by time-continuous CG images, for example. Furthermore, movement data containing the dynamic store model, movement routes of person models calculated with reflection of statistics during generation of the dynamic store model, and the like may be used for a purpose of estimation of unrecognized statistics. For example, concerning population density for each position within the facility, population density at unrecognized positions can be estimated on the basis of the dynamic store model.

<<Details of position data generation process>>

Details of the posture data generation process performed by the material and behavior generation unit 11 in FIG. 1 will be hereinafter described. It is assumed that a device implementing the material and behavior generation unit 11 is a data processing device 51.

<Configuration example of data processing device>

FIG. 14 is a block diagram depicting a configuration example of a data processing device performing the posture data generation process according to an embodiment.

For example, 3D data which is three-dimensional data obtained by measuring a person, or 2D data which is two-dimensional data obtained by imaging a person is input to the data processing device 51 depicted in FIG. 14. Moreover, in a case where data processing is performed for 2D data by the data processing device 51, TOF (Time Of Flight) data, which is image data of distance information associated with a person and acquired by a TOF sensor, is input to the data processing device 51, for example. Thereafter, the data processing device 51 outputs a CG model (3D model) to which a posture of a person corresponding to a target of data processing is applied, for example, as a result of data processing performed for the input data.

The data processing device 51 includes a 3D posture estimation unit 52, a 2D posture estimation unit 53, a 3D conversion unit 54, a time-series processing unit 55, a global coordinate conversion unit 56, a directional vector conversion unit 57, a data correction processing unit 58, a posture classification unit 59, a data augmentation unit 60, and a model applying unit 61.

The 3D posture estimation unit 52 estimates a posture of a person represented by 3D data with use of AI on the basis of the 3D data input to the data processing device 51, and supplies 3D posture data obtained as a result of this estimation to the time-series processing unit 55.

The 2D posture estimation unit 53 estimates a posture of a person represented by 2D data with use of AI on the basis of the 2D data input to the data processing device 51, and supplies 2D posture data obtained as a result of this estimation to the 3D conversion unit 54.

The 3D conversion unit 54 converts the 2D posture data supplied from the 2D posture estimation unit 53 into three-dimensional data on the basis of TOF data, and supplies the 3D posture data obtained as a result of this conversion to the time-series processing unit 55.

For example, as depicted in FIG. 15, the 3D posture data supplied to the time-series processing unit 55 herein is obtained by extracting, as feature points, specific joints of the person corresponding to the data processing target, and expressed by three-dimensional coordinates indicating positions of these feature points.

The time-series processing unit 55 performs a time-series process for associating 3D posture data continuously supplied for each identical person from the 3D posture estimation unit 52 or the 3D conversion unit 54 according to an elapse of time. For example, in the time-series process, the time-series processing unit 55 gives a personal ID (Identification) specifying an identical person for each 3D posture data.

For example, as depicted in FIG. 16, the time-series processing unit 55 is capable of associating 3D posture data obtained at respective times such as a time t, a time t+1, and a time t+2 for each identical person (person ID: person 1).

The global coordinate conversion unit 56 converts coordinates of the 3D posture data (e.g., coordinates corresponding to a position of a device having measured or imaged the person), for which the time-series process has been performed by the time-series processing unit 55, into global coordinates used for constituting a CG model by the data processing device 51.

The directional vector conversion unit 57 converts the 3D posture data converted into the global coordinates by the global coordinate conversion unit 56 into directional vectors to achieve conversion into posture data expressed by directional vectors. This conversion of the 3D posture data into the directional vectors can exclude information available as information for identification of individuals, and achieves presentation of postures of persons as normalized data allowed to be handled as general-purpose data. Note that conversion of 3D posture data into directional vectors by the directional vector conversion unit 57 will be described below with reference to FIGS. 17 and 18.

The data correction processing unit 58 performs a data correction process, such as data cleansing and data interpolation, for the posture data converted into the directional vectors by the directional vector conversion unit 57. For example, the data cleansing is a process for removing posture data indicating postures not allowed for humans, or deleting posture data according to time-series limitations, as will be described below with reference to FIGS. 19 to 23. The data interpolation is a process for interpolating the removed or deleted posture data by the data cleansing with use of posture data located before or after the removed or deleted posture data.

The posture classification unit 59 classifies the posture data, for which the data correction process has been performed by the data correction processing unit 58, according to predetermined postures, and supplies the posture data given corresponding posture labels to the data augmentation unit 60 and the model applying unit 61. For example, the posture classification unit 59 may automatically classify the posture data into a still posture and a walking posture as will be described below with reference to FIGS. 24 to 26.

The data augmentation unit 60 combines the posture data supplied from the posture classification unit 59 with other posture data in an appropriate manner, e.g., an upper body and a lower body as will be described below with reference to FIG. 27, to augment the posture data and generate new posture data. In this manner, the data augmentation unit 60 is capable of generating not only posture data based on the 3D data or the 2D data input to the data processing device 51, but also a larger volume of more varied posture data. Thereafter, the data augmentation unit 60 supplies the newly generated posture data to the model applying unit 61.

The model applying unit 61 applies the posture data supplied from the posture classification unit 59, or the posture data supplied from the data augmentation 60 to a CG model, and outputs the CG model (person model) having a posture corresponding to the posture data.

The data processing device 51 configured as described above is capable of outputting a large volume of CG models to each of which more varied posture data is applied, and expressing the posture data in the form of directional vectors. Accordingly, usability during handling of posture data improves.

<Processing example of process for directional vector conversion>

The process performed by the directional vector conversion unit 57 for converting 3D posture data into directional vectors will be described with reference to FIGS. 17 and 18.

For example, the directional vector conversion unit 57 converts 3D posture data represented by specific feature points of a person depicted in FIG. 15 into directional vectors to achieve conversion into posture data expressed by the first to nineteenth directional vectors having 16 points as start points or end points as depicted in FIG. 17. FIG. 18 illustrates the start points and the end points, and names of the first to nineteenth directional vectors in association with each other.

For example, the first directional vector is a LeftLowLeg vector which has a point 14 indicating the left knee as a start point, and a point 16 indicating the left heel as an end point. The second directional vector is a LeftUpLeg vector which has a point 12 indicating the left waist as a start point, and the point 14 indicating the left knee as an end point. The third directional vector is RightLowLeg vector which has a point 15 indicating the right knee as a start point, and a point 17 indicating the right heel as an end point. The fourth directional vector is a RightUpLeg vector which has a point 13 indicating the right waist as a start point, and the point 15 indicating the right knee as an end point. The fifth directional vector is a Hip vector which has the point 12 indicating the left waist as a start point, and the point 13 indicating the right waist as an end point.

The sixth directional vector is a LeftUpBody vector which has the point 12 indicating the left waist as a start point, and a point 6 indicating the left shoulder as an end point. The seventh directional vector is a RightUpBody vector which has the point 13 indicating the right waist as a start point, and a point 7 indicating the right shoulder as an end point. The eighth directional vector is a Shoulder vector which has the point 6 indicating the left shoulder as a start point, and the point 7 indicating the right shoulder as an end point. The ninth directional vector is a LeftArm vector which has the point 6 indicating the left shoulder as a start point, and a point 8 indicating the left elbow as an end point. The tenth directional vector is a RightArm vector which has the point 7 indicating the right shoulder as a start point, and a point 9 indicating the right elbow as an end point. The eleventh directional vector is a LeftForeArm vector which has the point 8 indicating the left elbow as a start point, and a point 10 indicating the left wrist as an end point. The twelfth directional vector is a RightForeArm vector which has the point 9 indicating the right elbow as a start point, and a point 11 indicating the right wrist as an end point.

The thirteenth directional vector is an Eyes vector which has a point 2 indicating the left eye as a start point, and a point 3 indicating the right eye as an end point. The fourteenth directional vector is a LeftNose vector which has the point 2 indicating the left eye as a start point, and a point 1 indicating the nose as an end point. The fifteenth directional vector is a RightNose vector which has the point 3 indicating the right eye as a start point, and the point 1 indicating the nose as an end point. The sixteenth directional vector is a RightFace vector which has a point 4 indicating the left cheek as a start point, and the point 2 indicating the left eye as an end point. The seventeenth directional vector is a LeftFace vector which has a point 5 indicating the right cheek as a start point, and the point 3 indicating the right eye as an end point. The eighteenth directional vector is a LeftNeck vector which has the point 6 indicating the left shoulder as a start point, and the point 1 indicating the nose as an end point. The nineteenth directional vector is a RightNeck vector which has the point 7 indicating the right shoulder as a start point, and the point 1 indicating the nose as an end point.

Moreover, directions of the first to nineteenth directional vectors can be normalized by the Hip vector which is the fifth directional vector.

In addition, the posture data converted into the directional vectors can be expressed by a matrix presented in following formula (1) as numerical data from which personal information is excluded.

[Math. 1]

$$\overrightarrow{pose} = \begin{bmatrix} x_1 & y_1 & z_1 \\ \vdots & \vdots & \vdots \\ x_{19} & y_{19} & z_{19} \end{bmatrix} \quad \cdots (1)$$

$$|[x_n \ y_n \ z_n]| = 1$$

In this manner, the direction vector conversion unit 57 is capable of converting 3D posture data into directional vectors to achieve conversion into posture data expressed by multiple directional vectors.

<Processing example of data cleansing>

Data cleansing performed for posture data by the data correction processing unit 58 will be described with reference to FIGS. 19 to 23.

For example, posture estimation based on the real world may include erroneous estimation. Accordingly, the data processing device 51 introduces data cleansing as a mechanism for automatically removing or deleting posture data erroneously estimated.

The data correction processing unit 58 performs data cleansing to remove posture data indicating postures not allowed for humans. In this manner, a directional vector indicating the waist or the shoulder excessively inclined with respect to horizontality, a directional vector indicating the upper body excessively inclined toward the back, and other unnatural posture data can be removed by thresholding.

In each of FIGS. 19 to 22 depicting distributions of the respective directional vectors, a left part indicates distributions before data cleansing, while a right part indicates distributions after data cleansing.

A of FIG. 19 depicts a distribution example of the LeftLowLeg vector before and after data cleansing. The distribution is wide before data cleansing (left part), but is narrow after data cleansing (right part). This figure illustrates removal of the LeftLowLeg vector excessively inclined to a level not allowed for humans by thresholding.

The same is applied hereinafter. B of FIG. 19 depicts a distribution example of the RightLowLeg vector, C of FIG. 19 depicts a distribution example of the LeftUpLeg vector, and D of FIG. 19 depicts a distribution example of the RightUpLeg vector, as distributions before and after data cleansing. A of FIG. 20 depicts a distribution example of the LeftUpBody vector, B of FIG. 20 depicts a distribution example of the RightUpBody vector, C of FIG. 20 depicts a distribution example of the RightNeck vector, and D of FIG. 20 depicts a distribution example of the Hip vector, as distributions before and after data cleansing. A of FIG. 21 depicts a distribution example of the Shoulder vector, B of FIG. 21 depicts a distribution example of the LeftArm vector, C of FIG. 21 depicts a distribution example of the RightArm vector, and D of FIG. 21 depicts a distribution example of the RightForeArm vector, as distributions before and after data cleansing. A of FIG. 22 depicts a distribution example of the LeftForeArm vector, and B of FIG. 22 depicts a distribution example of the LeftNeck vector, as distributions before and after data cleansing.

Data cleansing for deleting posture data according to time-series limitations will be described with reference to FIG. 23.

For example, degrees of similarity between vectors can be determined on the basis of cosine similarity presented in following formula (2).

[Math. 2]

$$\cos \text{ similarity} = \frac{\vec{a} \cdot \vec{b}}{|a||b|} \quad \cdots (2)$$

Formula (2) herein is a formula for obtaining cosine similarity between a vector a and a vector b. Cosine similarity has a value range from -1 to +1, and indicates +1 when the vector a and the vector b are completely coincident with each other.

In this case, the data correction processing unit 58 evaluates continuity of posture data from a previous frame on the basis of cosine similarity between 12 directional vectors as presented in following formula (3). Thereafter, the data correction processing unit 58 deletes, as erroneous estimation, posture data $[x_t, y_t, z_t]$ which indicates low similarity having average cosine similarity equal to or lower than a predetermined threshold (e.g., 0.9) in the evaluated data.

[Math. 3]

$$\text{if } \cos$$
$$= \text{mean}\left( \begin{bmatrix} x_{1\ t-1} & y_{1\ t-1} & z_{1\ t-1} \end{bmatrix} \begin{bmatrix} x_{1\ t} \\ y_{1\ t} \\ z_{1\ t} \end{bmatrix}, \cdots, \begin{bmatrix} x_{12\ t-1} & y_{12\ t-1} & z_{12\ t-1} \end{bmatrix} \begin{bmatrix} x_{12\ t} \\ y_{12\ t} \\ z_{12\ t} \end{bmatrix} \right)$$
$$< \text{threshold then}$$
$$\text{delete } [x_t, y_t, z_t] \quad \cdots (3)$$

For example, as depicted in A of FIG. 23, in a case where posture data at a time t and posture data at a time t+1 are similar to each other, cosine similarity increases. In a case where the posture data at the time t+1 and posture data at a time t+2 are similar to each other, cosine similarity increases. Accordingly, the data correction processing unit 58 in this case can determine that the posture data at the time t and the posture data at the time t+1 are continuous, and that the posture data at the time t+1 and the posture data at the time t+2 are continuous.

On the other hand, as depicted in B of FIG. 23, in a case where the posture data at the time t and the posture data at the time t+1 are unsimilar to each other, cosine similarity decreases. In a case where the posture data at the time t+1 and the posture data at the time t+2 are unsimilar to each other, cosine similarity decreases. Accordingly, the data correction processing unit 58 in this case can determine that the posture data at the time t and the posture data at the time t+1 are not continuous, and that the posture data at the time t+1 and the posture data at the time t+2 are not continuous, and delete the posture data at the time t+1. In this manner, in a case where low cosine similarity continues twice, the posture data before and after the deleted posture data are handled as normal data.

As described above, the data correction processing unit 58 is capable of removing or deleting unnatural posture data by data cleansing, and capable of interpolating the removed or deleted posture data on the basis of posture data located before and after the removed or deleted posture data by data interpolation.

<Processing example of process for posture data automatic classification>

A process performed by the posture classification unit 59 for automatically classifying posture data will be described with reference to FIGS. 24 to 26.

For example, the data processing device 51 introduces a mechanism for allowing the posture classification unit 59 to classify time-series posture data and give labels to the classified posture data so as to intentionally handle the posture data at a processing unit disposed in a following stage. Described herein will be a method for automatically classifying time-series posture data into a still posture and a walking posture on the basis of a rule while focusing on movement standard deviations of respective components of a specific directional vector.

As depicted in FIG. 24, the posture classification unit 59 calculates movement standard deviations with a predetermined window size for time-series posture data. FIG. 24 depicts a process example which initially calculates standard deviations with a window size of 7 from a time t+1 to a time t+7, and then calculates standard deviations with a window size of 7 from a time t+2 to a time t+8.

Thereafter, for classifying posture data into a still posture and a walking posture, the posture classification unit 59 performs a determination process for determining movement standard deviations according to a threshold while focusing on a Y component and a Z component of a directional vector of a leg. Specifically, in a case where each of the Y component and the Z component of the directional vector of the leg is lower than the threshold, the posture data is determined as a walking posture. In a case where the Y component and the Z component of the directional vector of the leg is equal to or higher than the threshold, the posture data is determined as a walking posture.

A of FIG. 25 depicts an example of original data of a directional vector of a leg in posture data of a person having a person ID of 2 (left part), and movement standard deviations (right part). As depicted in the figure, each of the movement standard deviations has a small value. Accordingly, the posture classification unit 59 can determined that this posture data indicates a still posture according to the threshold.

B of FIG. 25 depicts an example of original data of a directional vector of a leg in posture data of a person having a person ID of 11 (left part), and movement standard deviations (right part). As depicted in the figure, each of the movement standard deviations has a large value. Accordingly, the posture classification unit 59 can determined that this posture data indicates a walking posture according to the threshold.

In this manner, on the basis of threshold determination, the posture classification unit 59 is capable of classifying the posture data of the person having the person ID of 2 as the still posture and giving a label "idle," and is capable of classifying the posture data of the person having the person ID of 11 as the walking posture and giving a label "walk" as depicted in FIG. 26.

<Processing example of posture data augmentation>

A process performed by the data augmentation unit 60 for generating new posture data will be described with reference to FIG. 27.

For example, the data processing device 51 introduces a mechanism for allowing the data augmentation unit 60 to augment posture data so as to obtain a sufficient number of samples of posture data even when only a small volume of 3D data or 2D data is input. In addition, performance improvement for generalization of AI learning is achievable by automatic generation of posture data.

For example, the data augmentation unit 60 searches posture data having high similarity to a predetermined portion of original posture data supplied from the posture classification unit 59 (posture data having cosine similarity higher than a threshold) from posture data already acquired, and obtains a posture data group having high similarity in this portion. Thereafter, the data augmentation unit 60 randomly selects one posture data as data for augmentation from the posture data group, and combines a directional vector of a different portion of the posture data for augmentation with a directional vector of the predetermined portion of the original posture data to generate new posture data.

FIG. 27 depicts a processing example of a process designating a lower body of the original data as the predetermined portion.

As depicted in FIG. 27, a posture data group of posture data indicating a lower body and having high similarity to the lower body of the original data is obtained by searching on the basis of a degree of similarity of the directional vector indicating the lower body in the original data. Thereafter, posture data for augmentation is randomly selected from the posture data group. Furthermore, a directional vector indicating an upper body in the posture data for augmentation is combined with the directional vector indicating the lower body in the original posture data to generate new posture data.

As described above, the data augmentation unit 60 generates new posture data by augmenting posture data. This manner of posture data augmentation can augment various types of posture data other than a walking posture and a still posture. Moreover, the combination of the original posture data and the multiple posture data having high similarity to the predetermined portion in the original posture data (posture data for augmentation) is not limited to the combination of the upper body and the lower body, but may be a combination of any portion in the original posture data and a different portion in posture data for augmentation. In addition, this different portion combined with any portion in the original posture data may be a combination of different portions in the multiple posture data for augmentation.

<Processing example of process for applying posture data to CG model>

A process performed by the model applying unit 61 for applying posture data to a CG model will be described with reference to FIGS. 28 and 29.

For a predetermined directional vector, the model applying unit 61 calculates a rotation axis of a directional vector of a CG model on the basis of a cross product of a directional vector of posture data and the directional vector of the CG model, and calculates a rotation angle of rotation of the directional vector of the CG model on the basis of an inner product of the directional vector of the posture data and the directional vector of the CG model. Thereafter, the model applying unit 61 performs a bone rotation process so as to deform the posture of the CG model into a posture coincident with the posture of the posture data.

FIG. 28 depicts a processing example of a process performed for the LeftLowLeg vector.

As depicted in FIG. 28, firstly, a rotation axis of the LeftLowLeg vector of the CG model is calculated on the basis of a cross product of the LeftLowLeg vector of the posture data and the LeftLowLeg vector of the CG model. Secondly, a rotation angle of rotation of the LeftLowLeg vector of the CG model is calculated on the basis of an inner product of the LeftLowLeg vector of the posture data and the LeftLowLeg vector of the CG model. Thirdly, the LeftLowLeg vector (bone) of the CG model is rotated using a quaternion according to the rotation axis and the rotation angle.

In this case, a quaternion q represents rotation of an angle $\theta$ around any rotation axis $(\lambda_x, \lambda_y, \lambda_z)$ in a three-dimensional space, and can be expressed by four parameters presented in following formula (4) .

[Math. 4]

$$q = \left( \lambda_x \sin\frac{\theta}{2}, \lambda_y \sin\frac{\theta}{2}, \lambda_z \sin\frac{\theta}{2}, \cos\frac{\theta}{2} \right) \qquad \cdots (4)$$

Moreover, the model applying unit 61 performs a process for sequentially rotating the directional vectors in an order following outlined numerals given to black circles (forward kinematics) in FIG. 29.

Specifically, firstly, the LeftUpLeg vector is rotated. Secondly, the LeftLowLeg vector is rotated. Thirdly, the RightUpLeg vector is rotated. Fourthly, the RightLowLeg vector is rotated. Then, fifthly, a directional vector directed from the center of the Hip vector to the center of the Shoulder vector is rotated.

Similarly, sixthly, the LeftArm vector is rotated. Seventhly, the LeftForeArm vector is rotated. Eighthly, the RightArm vector is rotated. Ninthly, the RightForeArm vector is rotated. Then, tenthly, a directional vector directed from the center of the Shoulder vector to the point 1 indicating the nose is rotated.

In this manner, the model applying unit 61 is capable of outputting a CG model having a posture corresponding to posture data by applying the posture data to the CG model.

<Processing example of data processing>

FIG. 30 is a flowchart explaining data processing executed by the data processing device 51.

In step Sill, the 3D posture estimation unit 52 acquires 3D posture data on the basis of 3D data input to the data processing device 51, and supplies the acquired 3D posture data to the time-series processing unit 55. Alternatively, the 2D posture estimation unit 53 acquires 2D posture data on the basis of 2D data input to the data processing device 51, and supplies the acquired 2D posture data to the 3D conversion unit 54. The 3D conversion unit 54 acquires 3D posture data from the 2D posture data by using TOF data, and supplies the 3D posture data to the time-series processing unit 55.

In step S112, the time-series processing unit 55 performs the time-series process for associating data for each identical person on the basis of the 3D posture data supplied from the 3D posture estimation unit 52 or the 3D conversion unit 54 in step Sill, and supplies the associated data to the global coordinate conversion unit 56.

In step S113, the global coordinate conversion unit 56 converts coordinates of the 3D posture data supplied from the time-series processing unit 55 in step S112 into global coordinates, and supplies the global coordinates to the directional vector conversion unit 57.

In step S114, the directional vector conversion unit 57 converts the 3D posture data supplied from the global coordinate conversion unit 56 in step S113 into directional vectors for conversion into posture data expressed by directional vectors, and supplies the converted posture data to the data correction processing unit 58.

In step S115, the data correction processing unit 58 performs the data correction process for executing data cleansing and data interpolation for the posture data expressed by directional vectors and supplied from the directional vector conversion unit 57 in step S114, and supplies the processed posture data to the posture classification unit 59.

In step S116, the posture classification unit 59 classifies the posture data supplied from the data correction processing unit 58 in step S115 according to predetermined postures, and the posture data given corresponding posture labels to the data augmentation unit 60 and the model applying unit 61.

In step S117, the data augmentation unit 60 augments the posture data by combining posture data for augmentation with the posture data supplied from the posture classification unit 59 in step S116, and supplies newly generated posture data to the model applying unit 61.

In step S118, the model applying unit 61 applies the posture data supplied from the posture classification unit 59 in step S116, or the posture data supplied from the data augmentation unit 60 in step S117 to a CG model to output the CG model having a posture corresponding to the posture data.

The data processing device 51 is capable of outputting a large number of CG models to which more varied posture data is applied by performing the foregoing data processing. At this time, the data processing device 51 handles 3D posture data converted into directional vectors. In this manner, the posture data can be automatically applied to the CG models as posture data normalized and independent of positions, sizes, and the like of 3D data or 2D data input to the data processing device 51, for example. Accordingly, the posture data applied to the CG models is provided as information indicating only directions between respective joints without features and the like associated with sizes derivable from original persons, and therefore is applied to the CG models as posture data excluding information available for personal identification.

The data processing device 51 is therefore capable of receiving input of posture estimation and the like from the 3D posture estimation unit 52 or the 2D posture estimation unit 53 with use of AI, and automatically applying postures of persons, who are imitations of those in the real world, to CG models of persons. Moreover, the data processing device 51 uses posture data excluding information available for personal identification. In this manner, usability during handling of posture data is allowed to improve.

Furthermore, the data processing device 51 analyzes, as feature values, an X component, a Y component, and a Z component of a directional vector of a specific portion (e.g., leg) on which attention is focused according to time series of posture data expressed by directional vectors. In this manner, the posture data can be automatically classified according to predetermined postures (e.g., still posture and walking posture). For example, accuracy of posture data classification is allowed to improve by combining feature values of portions associated with an action of a classification target.

Accordingly, posture data can be handled as highly valuable data to which meanings are attached for each predetermined posture, and usability therefore improves. For example, a large volume of data can be processed by classifying posture data not through manual work by humans, but through automatic classification using the data processing device 51. Moreover, unlike classification of posture data based on AI, a necessity of dataset preparation including annotation work and the like can be eliminated.

Incidentally, while posture estimation provided by the 3D posture estimation unit 52 or the 2D posture estimation unit 53 with use of AI is input by way of example according to the present embodiment, the present technology is applicable to posture data acquired by a motion capture method, for example. Moreover, assembly of the data processing device 51 and the TOF sensor into an image sensor can provide such a configuration which allows the image sensor to output a CG model to which a posture of a person in an image captured by the image sensor has been applied.

<Configuration example of computer>

Next, a series of processes described above may be conducted either by hardware or by software. In a case where the series of processes are conducted by software, a program constituting this software is installed in a general-purpose computer or the like.

FIG. 31 is a block diagram depicting a configuration example of a computer where the program executing the series of processes described above has been installed according to one embodiment.

The program may be recorded beforehand in a hard disk 105 or a ROM 103 each of which is a recording medium built in the computer.

Alternatively, the program may be stored (recorded) in a removable recording medium 111 driven by a drive 109. The removable recording medium 111 of this type may be provided as generally-called package software. For example, the removable recording medium 111 herein may be a flexible disk, a CD-ROM (Compact Disc Read Only Memory), an MO (Magneto Optical) disk, a DVD (Digital Versatile Disc), a magnetic disk, or a semiconductor memory.

Note that the program may be installed into the computer from the removable recording medium 111 described above or may be downloaded to the computer via a communication network or a broadcasting network and installed into the build-in hard disk 105. Specifically, for example, the program may be wirelessly transferred from a download site to the computer via an artificial satellite for digital satellite broadcasting, or may be transferred by wire to the computer via a network such as a LAN (Local Area Network) and the Internet.

The computer has a built-in CPU (Central Processing Unit) 102. An input/output interface 110 is connected to the CPU 102 via a bus 101.

When a command is input to the CPU 102 from a user via the input/output interface 110 by operation of an input unit 107, for example, the CPU 102 executes the program stored in the ROM (Read Only Memory) 103 according to this command. Alternatively, the CPU 102 loads the program stored in the hard disk 105 into a RAM 104 (Random Access Memory) 104 and executes the loaded program.

In this manner, the CPU 102 performs processes following the flowcharts described above, or processes carried out by the configurations described above and depicted in the block diagrams. Thereafter, for example, the CPU 102 causes an output unit 106 to output results of these processes via the input/output interface 110, or causes a communication unit 108 to transmit the results and further causes the hard disk 105 to record the results as necessary.

Note that the input unit 107 includes a keyboard, a mouse, a microphone, and others. In addition, the output unit 106 includes an LCD (Liquid Crystal Display), a speaker, and others.

In the present description, the processes performed by the computer under the program herein are not necessarily required to be executed in time series in the orders specified in the flowcharts. Accordingly, the processes performed by the computer under the program include processes executed in parallel or individually (e.g., a parallel process or a process by an object).

Moreover, the program may be processed by one computer (processor) or may be processed by multiple computers as distributed processing. In addition, the program may be transferred to and executed by a remote computer.

Furthermore, the system in the present description refers to a set of multiple constituent elements (e.g., devices, modules (parts)), and all the constituent elements are not required to be contained in an identical housing. Accordingly, multiple devices stored in separate housings and connected to each other via a network, and one device having multiple modules contained in one housing are both systems.

In addition, for example, the configuration explained as one device (or processing unit) may be divided into multiple devices (or processing units). Conversely, the configuration explained above as multiple devices (or processing units) may be collected into one device (or processing unit). Moreover, needless to say, configurations not described above may be added to the configurations of the respective devices (or respective processing units). Furthermore, a part of the configuration of any one of the devices (processing units) may be included in the configuration of the different device (or different processing unit) if the configurations and operations as the entire system are substantially identical.

In addition, for example, the present technology may be configured as cloud computing where one function is shared by multiple devices and performed by the devices in cooperation with each other via a network.

Moreover, for example, the program described above may be executed by any device. In this case, this device is only required to have necessary functions (e.g., functional blocks), and obtain necessary information.

Furthermore, for example, the respective steps described with reference to the above flowcharts may be executed by one device, or may be shared and executed by multiple devices. In addition, in a case where multiple processes are contained in one step, the multiple processes contained in the one step may be executed by one device, or may be shared and executed by multiple devices. In other words, multiple processes contained in one step may be executed as processes in multiple steps. Conversely, processes explained as multiple steps may be collected and executed as one step.

In addition, in the program executed by the computer, processes in steps describing the program may be executed in time series in the orders explained in the present description, or may be executed in parallel, or individually at necessary timing such as an occasion of a call. Accordingly, the processes in the respective steps may be executed in orders different from the orders described above as long as no inconsistency is caused. Furthermore, the processes in the steps describing this program may be executed in parallel with processes in different programs, or may be executed in combination with processes in different programs.

Note that each of multiple techniques of the present technology described in the present description may be practiced independently as a single technique as long as no inconsistency is caused. Needless to say, any plural techniques of the present technology may be combined and practiced. For example, a part or all of the present technology explained in any one of the embodiments may be combined with a part or all of the present technology explained in the different embodiment, and practiced in this form. In addition, a part or all of any technique of the present technology described above may be combined with a different technology not described above, and practiced in this form.

Note that the present technology may also be implemented in the following configurations.

(1) A data processing device including:
a generation unit that generates a movement route for a person model included in a 3D model that is dynamic and provided for forming a CG image, the person model moving on a virtual facility model imitating a facility in a real space, and the movement route being generated using a statistic associated with a real user moving in the facility.

(2) The data processing device according to (1) above, in which the generation unit generates the movement route of the person model by combining calculation for obtaining a movement route for each group of multiple groups including the multiple person models, and calculation for obtaining a movement route, on a basis of the movement route for each of the groups, for each person of the multiple person models constituting the groups.

(3) The data processing device according to (2) above, in which the generation unit sets, on a basis of a statistic, a proportion of the number of each of the groups each corresponding to one of multiple types of attributes defined for classifying the groups.

(4) The data processing device according to (2) or (3) above, in which the generation unit sets, as a movement speed for each of the groups, a movement speed corresponding to an attribute of the corresponding group and reflecting a statistic.

(5) The data processing device according to any one of (2) to (4) above, in which the generation unit sets, as a waypoint for each of the groups, a waypoint corresponding to an attribute of the corresponding group and reflecting a statistic.

(6) The data processing device according to any one of (1) to (5) above, in which the generation unit generates a heat map that indicates a distribution of population density during movement of the person model along the movement route.

(7) The data processing device according to any one of (2) to (5) above, in which the generation unit uses an A* algorithm for calculation of the movement route for each of the groups.

(8) The data processing device according to (7) above, in which, for calculation of the movement route for each of the groups with use of the A* algorithm, the generation unit sets an influence level for weighting according to a length and a position of an actual route, and changes a position likely to become a passing point of the movement route or a position unlikely to become a passing point of the movement route according to an attribute of the corresponding group.

(9) The data processing device according to any one of (2) to (5), (7), and (8) above, in which the generation unit uses multi-agent simulation for calculation of the movement route for each of the persons.

(10) The data processing device according to any one of (2) to (5) and (7) to (9) above, in which the generation unit repeats calculation of the movement route for each of the groups, and calculation of the movement route for each of the persons for every unit time.

(11) The data processing device according to any one of (1) to (10) above, in which the generation unit acquires the statistic from a video image captured at the facility.

(12) The data processing device according to any one of (1) to (11) above, in which the generation unit sets an action corresponding to a position of the movement route of the person model, and applies posture data corresponding to the action to the person model.

(13) The data processing device according to (12) above, in which the generation unit combines multiple posture data measured or imaged at the facility and each indicating a different portion of the posture data to generate new posture data as 3D posture data represented by specific person feature points, converts the 3D posture data into directional vectors to generate posture data expressed by the multiple directional vectors, combines the posture data that is one posture data with the posture data that is different posture data and has a predetermined portion highly similar to a corresponding portion of the one posture data, and applies the combined posture data to the person model.

(14) The data processing device according to any one of (1) to (13) above, in which the generation unit generates the 3D model for forming a sufficient number of the CG images for AI learning.

(15) A data processing method for a data processing device including a generation unit, in which
the generation unit generates a movement route for a person model included in a 3D model that is dynamic and provided for forming a CG image, the person model moving on a virtual facility model imitating a facility in a real space, and the movement route being generated using a statistic associated with a real user moving in the facility.

(16) A program for causing a computer to function as:
a generation unit that generates a movement route for a person model included in a 3D model that is dynamic and provided for forming a CG image, the person model moving on a virtual facility model imitating a facility in a real space, and the movement route being generated using a statistic associated with a real user moving in the facility.

Note that the present technology is not limited to the preferred embodiment discussed above and may be implemented in diverse modification so far as they are within the scope of the technology. The advantageous effects stated in this description are only examples and not limitative of the present disclosure that may provide other advantages as well.

[Reference Signs List]

| | |
|---|---|
| 1: | Data processing system |
| 11: | Material and behavior generation unit |
| 12: | Database unit |
| 13: | Dataset automatic generation unit |
| 31: | Procedural modeling unit |
| 32: | CG rendering unit |
| 33: | Automatic annotation unit |
| 34: | Storage unit |
| 51: | Data processing device |
| 52: | 3D posture estimation unit |
| 53: | 2D posture estimation unit |
| 54: | 3D conversion unit |
| 55: | Time-series processing unit |
| 56: | Global coordinate conversion unit |
| 57: | Directional vector conversion unit |
| 58: | Data correction processing unit |
| 59: | Posture classification unit |
| 60: | Data augmentation unit |
| 61: | Model applying unit |

**Claims**

1. A data processing device comprising: a generation unit that generates a movement route for a person model included in a 3D model that is dynamic and provided for forming a CG image, the person model moving on a virtual facility model imitating a facility in a real space, and the movement route being generated using a statistic associated with a real user moving in the facility.

2. The data processing device according to claim 1, wherein the generation unit generates the movement route of the person model by combining calculation for obtaining a movement route for each group of multiple groups including the multiple person models, and calculation for obtaining a movement route, on a basis of the movement route for each of the groups, for each person of the multiple person models constituting the groups.

3. The data processing device according to claim 2, wherein the generation unit sets, on a basis of a statistic, a proportion of the number of each of the groups each corresponding to one of multiple types of attributes defined for classifying the groups.

4. The data processing device according to claim 2, wherein the generation unit sets, as a movement speed for each of the groups, a movement speed corresponding to an attribute of the corresponding group and reflecting a statistic.

5. The data processing device according to claim 2, wherein the generation unit sets, as a waypoint for each of the groups, a waypoint corresponding to an attribute of the corresponding group and reflecting a statistic.

6. The data processing device according to claim 1, wherein the generation unit generates a heat map that indicates a distribution of population density during movement of the person model along the movement route.

7. The data processing device according to claim 2, wherein the generation unit uses an A* algorithm for calculation of the movement route for each of the groups.

8. The data processing device according to claim 7, wherein, for calculation of the movement route for each of the groups with use of the A* algorithm, the generation unit sets an influence level for weighting according to a length and a position of an actual route, and changes a position likely to become a passing point of the movement route or a position unlikely to become a passing point of the movement route according to an attribute of the corresponding group.

9. The data processing device according to claim 2, wherein the generation unit uses multi-agent simulation for calculation of the movement route for each of the persons.

10. The data processing device according to claim 2, wherein the generation unit repeats calculation of the movement route for each of the groups, and calculation of the movement route for each of the persons for every unit time.

11. The data processing device according to claim 1, wherein the generation unit acquires the statistic from a video image captured at the facility.

12. The data processing device according to claim 1, wherein the generation unit sets an action corresponding to a position of the movement route of the person model, and applies posture data corresponding to the action to the person model.

13. The data processing device according to claim 12, wherein the generation unit combines multiple posture data measured or imaged at the facility and each indicating a different portion of the posture data to generate new posture data as 3D posture data represented by specific person feature points, converts the 3D posture data into directional vectors to generate posture data expressed by the multiple directional vectors, combines the posture data that is one posture data with the posture data that is different posture data and has a predetermined portion highly similar to a corresponding portion of the one posture data, and applies the combined posture data to the person model.

14. The data processing device according to claim 1, wherein the generation unit generates the 3D model for forming a sufficient number of the CG images for AI learning.

15. A data processing method for a data processing device including a generation unit, wherein
the generation unit generates a movement route for a person model included in a 3D model that is dynamic and provided for forming a CG image, the person model moving on a virtual facility model imitating a facility in a real space, and the movement route being generated using a statistic associated with a real user moving in the facility.

16. A program for causing a computer to function as:
a generation unit that generates a movement route for a person model included in a 3D model that is dynamic and provided for forming a CG image, the person model moving on a virtual facility model imitating a facility in a real space, and the movement route being generated using a statistic associated with a real user moving in the facility.

# FIG.1

# FIG.2

EP 4 471 726 A1

VIDEO IMAGE

ANONYMIZATION + IMAGE RECOGNITION

**POSTURE ESTIMATION INFORMATION**

MOVEMENT ESTIMATION INFORMATION

ANONYMIZATION + IMAGE RECOGNITION

**PORTION DIVISION**

STANDARDIZE SIZE AND DIVIDE

STANDARDIZE SIZE AND DIVIDE
ARM MOTION INFORMATION
LEG MOTION INFORMATION
ARM MORTION INFORMATION

**JUNCTION**

COMBINE PARTIAL MOTION OF OTHERS OR ARTIFICIAL PARTIAL MOTION

**ADDITIONAL WORK**

CHANGE OF BODILY FEATURES SUCH AS HEIGHT AND WEIGHT

THINNING + INTERPOLATION (FK/K)

**STATISTICS**

ROOM ENTRANCE
EXIT
POPULATION DENSITY AT PASSAGE
MOVEMENT SPEED
VARIANCE AND DISTRIBUTION

EXCLUSION OF PERSONAL INFORMATION

POPULATION FLOW OF CROWD

GENERATE MANY VARIED MOVEMENT ROUTES FROM RANDOM NUMBERS

NEW DATA GENERATION

**EXTRACTION**

SELECT ANY MOVEMENT ROUTE FROM GENERATED ROUTES

ADJUST DATA DISTRIBUTION FOR AI LEARNING

COMBINE AND USE FOR AI LEARNING

# FIG.3

```
┌──────────────┐     ┌──────────────┐     ┌─────────────────────┐     ┌──────────────────────┐     ┌──────────────┐
│   POSTURE    │     │   2D → 3D    │     │  Bone CONVERSION    │     │   STANDARDIZATION    │     │              │        ASSEMBLY
│  ESTIMATION  │────▶│  ESTIMATION  │────▶│                     │────▶│  - COORDINATE AXIS   │────▶│ APPLICATION  │────▶   INTO CG
│     2D       │     │              │     │ Keypoints: 14 POINTS│     │  - SCALE             │     │ TO PERSON    │        SCENARIO
└──────────────┘     └──────────────┘     │          ↓          │     │  - INTERPOLATION     │     │   3D-CG      │
                                          │ Bone: 60 TO 100 POINTS    │  - DENOISE           │     │              │
┌──────────────┐                          │                     │     └──────────────────────┘     └──────────────┘
│   POSTURE    │                          └─────────────────────┘
│  ESTIMATION  │──────────────────────────────────▲
│     3D       │
└──────────────┘
```

# FIG.4

## FLOOR MAP

## DEFINITION OF FLOOR MAP AND ENTRANCE/EXIT

EP 4 471 726 A1

# FIG.5

ROUTE AUTOMATIC FORMATION

# FIG.6

```
        ┌──────────────────────┐
        │   MOVEMENT DATA      │
        │ GENERATION PROCESS   │
        └──────────────────────┘
                   │
                   ▼            S11
        ┌──────────────────────┐
        │    INITIALIZE MAP     │
        └──────────────────────┘
                   │
                   ▼            S12
        ┌──────────────────────┐
        │ SET GROUP AND PERSON  │
        │      ATTRIBUTE        │
        └──────────────────────┘
                   │
                   ▼            S13
        ┌──────────────────────────┐
        │ DETERMINE ROUTE UPDATE   │
        │        ORDER             │
        └──────────────────────────┘
                   │
                   ▼            S14
        ╱──────────────────────────╲      Yes
        ⟨ SIMULATION TIME < TOTAL TIME? ⟩────────┐
        ╲──────────────────────────╱             │
                   │                             │
                   │ No                          │
                   ▼            S15              │
        ┌──────────────────────────┐            │
        │ │ ROUTE CALCULATION   │ │             │
        │ │  FOR EACH GROUP     │ │             │
        └──────────────────────────┘            │
                   │                             │
                   ▼            S16              │
        ┌──────────────────────────┐            │
        │   ADD UNIT TIME TO       │            │
        │   SIMULATION TIME        │            │
        └──────────────────────────┘            │
                   │                             ▼
                   └──────────→          ┌──────────────┐
                                         │     END      │
                                         └──────────────┘
```

# FIG.7

```
        ┌─────────────────────────────┐
        │   ROUTE CALCULATION          │
        │   FOR EACH GROUP             │
        └─────────────────────────────┘
                     │
                     ▼              S31
        ┌─────────────────────────────┐
        │   SET ROUTE (GROUP)          │
        │   CORRESPONDING TO ROUTE     │
        │   CALCULATION TARGET         │
        └─────────────────────────────┘
                     │
                     ▼              S32
        ┌─────────────────────────────┐
        │   UPDATE STATE TRANSITION    │
        └─────────────────────────────┘
                     │
                     ▼              S33
        ┌─────────────────────────────┐
        │   ACQUIRE POSITIONS OF       │
        │   SURROUNDING PERSONS        │
        └─────────────────────────────┘
                     │
                     ▼              S34
        ┌─────────────────────────────┐
        │   SEARCH ROUTE TO            │
        │   DESTINATION (A* ALGORITHM) │
        └─────────────────────────────┘
                     │
                     ▼              S35
        ┌─┬─────────────────────────┬─┐
        │ │ ROUTE CALCULATION FOR   │ │
        │ │ EACH PERSON             │ │
        └─┴─────────────────────────┴─┘
                     │
                     ▼              S36
   No  ╱─────────────────────────────╲
  ◄────┤   ROUTE CALCULATION          │
       ╲  COMPLETED FOR ALL GROUPS?  ╱
        ╲───────────────────────────╱
                     │ Yes
                     ▼
        ┌─────────────────────────────┐
        │         RETURN               │
        └─────────────────────────────┘
```

31

# FIG.8

```
┌─────────────────────────┐
│   ROUTE CALCULATION     │
│   FOR EACH PERSON       │
└─────────────────────────┘
```

S51

SET ROUTE (PERSON) CORRESPONDING TO ROUTE CALCULATION TARGET

S52

ACQUIRE POSITION AND ACCELERATION OF TARGET PERSON

S53

ACQUIRE POSITIONS OF SURROUNDING PERSONS

S54

ACQUIRE MOVEMENT VECTOR OF GROUP

S55

UPDATE POSITION AND ACCELERATION (MULTI-AGENT)

S56

No — ROUTE CALCULATION COMPLETED FOR ALL MEMBERS IN GROUP?

Yes

```
┌─────────────┐
│   RETURN    │
└─────────────┘
```

# FIG.9

RATE OF
NUMBER OF
PERSONS

FEMALE

MALE

AGE

# FIG.10

| | FOOD SELLING AREA | BRAND-NAME PRODUCT SELLING AREA | TOY SELLING AREA | RESTAURANT |
|---|---|---|---|---|
| SINGLE (FEMALE) | 70% | 80% | 10% | 30% |
| SINGLE (MALE) | 50% | 20% | 20% | 20% |
| COUPLE | 20% | 70% | 10% | 60% |
| HUSBAND AND WIFE | 50% | 50% | 10% | 60% |
| FAMILY WITH CHILDREN | 30% | 20% | 80% | 70% |
| LARGE PARTY | 20% | 20% | 30% | 30% |

EP 4 471 726 A1

# FIG.11

## A

FLOOR MAP

## B

HEAT MAP

EP 4 471 726 A1

# FIG.12

PERSON ASSET

ESTIMATION RESULT OF POSTURE DEFINED ACTION → Keyframe SETTING → PERSON ASSET

ESTIMATION RESULT OF POPULATION FLOW DEFINED MOVEMENT OF PERSONS → MOVEMENT RULE SETTING → ASSET ARRANGEMENT RULE

AR MEASUREMENT CAD DATA LIGHTING CONDITION

PRODUCT SHELF ASSET → STORE SHAPE OUTLINE + LIGHTING MODEL + MATERIAL

COMBINE ASSETS FOR AUTOMATIC SCENE MODELING

EP 4 471 726 A1

# FIG.13

**PROCEDURAL MODELING UNIT** 31

ASSET AUTOMATIC ARRANGEMENT

**INFORMATION FOR RENDERING** →

**CG RENDERING UNIT** 32

CG IMAGE WITH MATERIAL AND LIGHTING CONDITION APPLIED

**3D COORDINATE INFORMATION**

**2D COORDINATE INFORMATION**

**CG RENDERING RESULT**
- IMAGE FOR LEARNING/VERIFICATION
- IMAGE FOR TEST

**AUTOMATIC ANNOTATION UNIT** 33

CORRECT ANSWER INFORMATION FOR LEARNING

**AI DEVELOPER** 41

**ANNOTATION INFORMATION**
- Boundary Box
- Segmentation
- Keypoints / Pose

EP 4 471 726 A1

# FIG.14

EP 4 471 726 A1

# FIG.15

FIG.16

# FIG.17

13.Eyes

17.RightFace

16.LeftFace

15.RightNose

14.LeftNose

19.RightNeck

18.LeftNeck

8.Shoulder

10.RightArm

9.LeftArm

12.RightForeArm

11.LeftForeArm

7.RightUpBody

6.LeftUpBody

5.Hip

4.RightUpLeg

2.LeftUpLeg

3.RightLowLeg

1.LeftLowLeg

# FIG.18

| No. | skeleton | Name |
|-----|----------|------|
| 1 | 14-16 | LeftLowLeg |
| 2 | 12-14 | LeftUpLeg |
| 3 | 15-17 | RightLowLeg |
| 4 | 13-15 | RightUpLeg |
| 5 | 12-13 | Hip |
| 6 | 12-6 | LeftUpBody |
| 7 | 13-7 | RightUpBody |
| 8 | 6-7 | Shoulder |
| 9 | 6-8 | LeftArm |
| 10 | 7-9 | RightArm |
| 11 | 8-10 | LeftForeArm |
| 12 | 9-11 | RightForeArm |
| 13 | 2-3 | Eyes |
| 14 | 2-1 | LeftNose |
| 15 | 3-1 | RightNose |
| 16 | 4-2 | LeftFace |
| 17 | 5-3 | RightFace |
| 18 | 6-1 | LeftNeck |
| 19 | 7-1 | RightNeck |

# FIG.19

# FIG.20

# FIG.21

# FIG.22

# FIG.23

FIG.24

CALCULATE STANDARD DEVIATION

CALCULATE STANDARD DEVIATION

EP 4 471 726 A1

# F I G . 2 5

ORIGINAL DATA

moving S,D.

A

B

EP 4 471 726 A1

# FIG.26

person:2

idle

person:11

walk

AUTOMATIC CLASSIFICATION

# FIG.27

ORIGINAL
POSTURE DATA

person:1

SEARCH

POSTURE DATA GROUP

person:17   person:2

person:33   person:1

SELECT

ORIGINAL
POSTURE DATA

person:1

POSTURE DATA FOR
AUGMENTATION

person:33

+

=

NEWLY GENERATED
POSTURE DATA

EP 4 471 726 A1

# FIG.28

① CALCULATE ROTATION AXIS BY CROSS PRODUCT OF VECTORS

② CALCULATE ROTATION ANGLE BY INNER PRODUCT OF VECTORS

③ ROTATE BONE BY QUATERNION ACCORDING TO ROTATION AXIS AND ROTATION ANGLE

# FIG.29

# FIG.30

```
         ┌──────────┐
         │  START   │
         └────┬─────┘
              ▼
    ┌──────────────────────────┐
    │  ACQUIRE POSTURE DATA    │ S111
    └────────────┬─────────────┘
                 ▼
    ┌──────────────────────────┐
    │ PERFORM TIME-SERIES      │ S112
    │ PROCESS                  │
    └────────────┬─────────────┘
                 ▼
    ┌──────────────────────────┐
    │ CONVERT INTO GLOBAL      │ S113
    │ COORDINATE               │
    └────────────┬─────────────┘
                 ▼
    ┌──────────────────────────┐
    │ CONVERT INTO DIRECTIONAL │ S114
    │ VECTOR                   │
    └────────────┬─────────────┘
                 ▼
    ┌──────────────────────────┐
    │ PERFORM DATA CORRECTION  │ S115
    │ PROCESS                  │
    └────────────┬─────────────┘
                 ▼
    ┌──────────────────────────┐
    │ CLASSIFY POSTURE         │ S116
    └────────────┬─────────────┘
                 ▼
    ┌──────────────────────────┐
    │ AUGMENT DATA             │ S117
    └────────────┬─────────────┘
                 ▼
    ┌──────────────────────────┐
    │ APPLY TO MODEL           │ S118
    └────────────┬─────────────┘
                 ▼
         ┌──────────┐
         │   END    │
         └──────────┘
```

# FIG.31

## INTERNATIONAL SEARCH REPORT

| International application No. |
| --- |
| **PCT/JP2023/000719** |

| A. | CLASSIFICATION OF SUBJECT MATTER |
| --- | --- |

*G06T 19/00*(2011.01)i; *G06Q 30/0201*(2023.01)i; *G06T 13/40*(2011.01)i; *G09B 29/00*(2006.01)i
FI:  G06T19/00 A; G06T13/40; G06Q30/0201; G09B29/00 Z

According to International Patent Classification (IPC) or to both national classification and IPC

| B. | FIELDS SEARCHED |
| --- | --- |

Minimum documentation searched (classification system followed by classification symbols)

G06T19/00; G06Q30/0201; G06T13/40; G09B29/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2021-111101 A (AWL INC) 02 August 2021 (2021-08-02)<br>   paragraphs [0001]-[0083], fig. 1-14 | 1, 12, 14-16 |
| Y |    paragraphs [0001]-[0083], fig. 1-14 | 6, 11 |
| A |    paragraphs [0001]-[0083], fig. 1-14 | 2-5, 7-10, 13 |
| Y | JP 2020-042367 A (AWL INC) 19 March 2020 (2020-03-19)<br>   paragraphs [0020]-[0029], fig. 1-2 | 6, 11 |

| ☐ Further documents are listed in the continuation of Box C. | ☑ See patent family annex. |
| --- | --- |

| \* Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **28 March 2023** | **04 April 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
|---|
| **PCT/JP2023/000719** |

| Patent document cited in search report | | | Publication date (day/month/year) | Patent family member(s) | Publication date (day/month/year) |
|---|---|---|---|---|---|
| JP | 2021-111101 | A | 02 August 2021 | (Family: none) | |
| JP | 2020-042367 | A | 19 March 2020 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2008176696 A